# EUROPEAN PATENT APPLICATION

(11) **EP 3 897 058 A1**
(43) Date of publication of application: **20.10.2021**
(21) Application number: 20755731.5
(22) Date of filing: 12.02.2020
(51) Int. Cl.: H04W 72/04

(54) **METHOD AND APPARATUS FOR TRANSMITTING INFORMATION**

(30) Priority: 14.02.2019 CN 201910115214; 11.04.2019 CN 201910290418
(71) Applicant: Huawei Technologies Co., Ltd., Longgang District, Shenzhen, Guangdong 518129, (CN)
(72) Inventor: XU, Haibo, Shenzhen, Guangdong 518129 (CN); KUANG, Yiru, Shenzhen, Guangdong 518129 (CN); WANG, Jian, Shenzhen, Guangdong 518129 (CN); LUO, Haiyan, Shenzhen, Guangdong 518129 (CN)
(74) Representative: Pfenning, Meinig & Partner mbB
(86) International application number: PCT/CN2020/074824
(87) International publication number: WO 2020/164502

(57) **Abstract**

This application provides an information transmission method and an apparatus. The method includes: A first network device receives an overheating message sent by a terminal device, where the overheating message includes overheating assistance information, and the overheating assistance information is used to indicate whether the terminal device is overheated; the first network device determines a second message based on the overheating assistance information, where the second message is used to indicate a second network device to adjust a communications parameter configured for the terminal device; and the first network device sends the second message to the second network device. When the terminal device is overheated, a secondary node can configure a proper communications parameter for the terminal device to resolve an overheating problem. After the overheating problem of the terminal device is resolved, a master node may further notify the secondary node that the overheating problem of the terminal device is resolved.

## Description

### TECHNICAL FIELD

This application relates to the communications field, and more specifically, to an information transmission method and an apparatus in the communications field.

### BACKGROUND

In a case of high-speed data transmission, a large quantity of multiple-input multiple-output layers (multiple-input multiple-output layer, MIMO layer), a high bandwidth, and a plurality of carriers are configured for a terminal device, resulting in an overheating problem of the terminal device. In addition, the configuration of the large quantity of MIMO layers, the high bandwidth, and the plurality of carriers also causes excessively high power consumption of the terminal device.

To resolve the overheating problem of the terminal device or optimize power consumption of the terminal device, different information needs to be exchanged between the terminal device and a network device. After the terminal device encounters the overheating problem or the overheating problem is alleviated, the terminal device may send, to a base station, assistance information (UE assistance information) carrying overheating indication information, so that the base station may adjust a communications parameter configured for the terminal device, for example, a quantity of secondary cells, a quantity of MIMO layers MIMO layers, a quantity of antenna ports, or a maximum aggregated bandwidth, to resolve the current overheating problem of the terminal device. When the terminal device expects to lower communications configuration to reduce power consumption, the terminal device may also send assistance information to the base station, so that the base station may adjust a communications parameter configured for the terminal device, for example, a quantity of secondary cells, a quantity of MIMO layers MIMO layers, a quantity of antenna ports, or a maximum aggregated bandwidth.

However, in a multi-radio dual connectivity (multi-radio dual connectivity, MR-DC) network architecture, two access network devices (a master base station and a secondary base station) provide service transmission for the terminal device at the same time. When the terminal device encounters the overheating problem or the terminal device expects to reduce power consumption, the master base station needs to adjust a communications parameter configured for the terminal device, and the secondary base station also needs to adjust a communications parameter configured for the terminal device, to resolve the overheating problem of the terminal device or reduce the power consumption of the terminal device. In addition, in a CU-DU based access network architecture, when the terminal device encounters the overheating problem or expects to reduce power consumption, a CU needs to adjust a communications parameter configured for the terminal device, and a DU also needs to adjust a communications parameter configured for the terminal device, to resolve the overheating problem of the terminal device or reduce the power consumption of the terminal device.

### SUMMARY

This application provides an information transmission method and an apparatus. According to the method, a proper maximum quantity of MIMO layers, a proper maximum quantity of SCells, or a proper maximum aggregated bandwidth can be configured for a terminal device, to resolve an overheating problem of the terminal device.

According to a first aspect, an information transmission method is provided, including: A first network device receives a first message sent by a terminal device, where the first message includes first overheating assistance information, and the first overheating assistance information is used to indicate whether the terminal device is overheated; the first network device determines a second message based on the first overheating assistance information, where the second message is used to indicate a second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and the first network device sends the second message to the second network device.

With reference to the first aspect, in some possible implementations, the communications parameter may include at least one of the following parameters that the terminal device prefers to be temporarily configured: a maximum quantity of uplink secondary cells (Scell), a maximum quantity of downlink secondary cells (Scell), a maximum quantity of uplink MIMO layers of a serving cell in a frequency range FR 1 (a frequency band < 6 GHz), a maximum quantity of downlink MIMO layers of the serving cell in the FR 1, a maximum quantity of uplink MIMO layers of a serving cell in a frequency range FR 2 (a frequency band > 6 GHz), a maximum quantity of downlink MIMO layers of the serving cell in the FR 2, a maximum uplink aggregated bandwidth across an uplink carrier in the FR 1, a maximum downlink aggregated bandwidth across a downlink carrier in the FR 1, a maximum uplink aggregated bandwidth across an uplink carrier in the FR 2, and a maximum downlink aggregated bandwidth across a downlink carrier in the FR 2.

With reference to the first aspect, in some possible implementations, a maximum quantity of MIMO layers (which includes at least one of the maximum quantity of uplink MIMO layers of the serving cell in the FR 1, the maximum quantity of downlink MIMO layers of the serving cell in the FR 1, the maximum quantity of uplink MIMO layers of the serving cell in the FR 2, and the maximum quantity of downlink MIMO layers of the serving cell in the FR 2) in the assistance information may be a maximum quantity of MIMO layers, of a serving cell of an SCG, that the terminal device prefers to be configured by an SN, or may be a maximum quantity of MIMO layers, of a serving cell of an MCG, that the terminal device prefers to be configured by an MN, or may be a maximum quantity of MIMO layers, of a serving cell of an MCG, that the terminal device prefers to be configured by an MN, and be a maximum quantity of MIMO layers, of a serving cell of an SCG, that the terminal device prefers to be configured by an SN. Alternatively, maximum quantities of MIMO layers in the assistance information may include a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN.

With reference to the first aspect, in some possible implementations, a maximum aggregated bandwidth (including at least one of the maximum uplink aggregated bandwidth across the uplink carrier in the FR 1, the maximum downlink aggregated bandwidth across the downlink carrier in the FR 1, the maximum uplink aggregated bandwidth across the uplink carrier in the FR 2, and the maximum downlink aggregated bandwidth across the downlink carrier in the FR 2) in the assistance information may be a maximum aggregated bandwidth value, across a carrier, that the terminal device prefers to be configured by an SN, or may be a maximum sum of an aggregated bandwidth, across a carrier, that the terminal device prefers to be configured by an MN and an aggregated bandwidth, across a carrier, that the terminal device prefers to be configured by an SN.

It should be understood that the second message may be further used to request the second network device to configure a communications parameter for the terminal device.

It should be further understood that the second message may alternatively include no communications parameter. After an overheating problem of the terminal device is resolved, the second message includes no information related to a communications parameter. This is not limited in this application.

Optionally, the first message is a message that is sent by the terminal device to an MN and that carries the overheating assistance information. When the terminal device is overheated, the terminal device sends an overheating message to the MN. The overheating message includes the overheating assistance information, the overheating assistance information may include a communications parameter currently supported by the terminal device, and the communications parameter is a parameter configuration that can be used to resolve the overheating problem of the terminal device.

It should be understood that when the terminal device establishes a connection to each of the MN and an SN, the MN and the SN may learn of a radio capability (radio capability) of the terminal device. A communications parameter reported by the terminal device in an overheating case is less than a communications parameter corresponding to the radio capability.

For example, based on the radio capability of the terminal device, when the terminal device is not overheated, the terminal device can support 31 SCells. When the terminal device is overheated, the overheating assistance information sent by the terminal device to the MN indicates that a maximum quantity of Scells that the terminal device currently prefers to be temporarily configured is 6. In other words, the overheating problem of the terminal device can be resolved only when a sum of quantities of Scells that are separately configured by the MN and the SN for the terminal device is less than or equal to 6.

It should be further understood that, when the terminal device is overheated, in an MR-DC scenario, the overheating assistance information reported by the terminal device to the MN may include a maximum quantity of Scells. In addition, in an NE-DC scenario and an NR-DC scenario, the overheating assistance information reported by the terminal device to the MN may include at least one of a maximum quantity of Scells, a maximum quantity of MIMO layers, and a maximum aggregated bandwidth.

With reference to the first aspect, in some possible implementations, the method further includes: The first network device receives a third message sent by the second network device, where the third message is a response message for the second message, and the third message is used to indicate a communications parameter configured by the second network device for the terminal device.

When the terminal device is overheated, the terminal device uses the overheating assistance information to carry the currently supported communications parameter. When the overheating problem of the terminal device is resolved, the overheating assistance information includes no information. Therefore, the MN may determine, based on whether the overheating assistance information carries information, whether the terminal device is overheated currently.

The MN receives the overheating message sent by the terminal device, and determines, based on the overheating assistance information in the overheating message, that the terminal device encounters the overheating problem. After the MN determines that the terminal device encounters the overheating problem, the MN and the SN need to configure a communications parameter for the terminal device based on a communications parameter expected by the terminal device, to resolve the overheating problem of the terminal device. The MN may indicate, by using the second message, that the SN needs to adjust the communications parameter configured for the terminal device. For different types of communications parameters, the second message may correspondingly include different information. In addition, the SN notifies, by using the third message, the MN of the communications parameter configured for the terminal device. The third message may be understood as the response message for the second message. For different types of information included in the second message, the third message correspondingly includes different types of information. For details, refer to related descriptions in the embodiments.

According to the foregoing technical solutions, in a dual connectivity network architecture, for a master node device (the MN) and a secondary node device (the SN), when the terminal device encounters the overheating problem, the MN may notify the SN that the terminal device encounters the overheating problem, or provide, for the SN, the assistance information that is determined by the MN and that is used to resolve the overheating problem of the terminal device. The assistance information may include a communications parameter that the MN indicates that the SN can or is allowed to configure for the terminal device, or the assistance information may include the communications parameter that is reported by the terminal device and that is used to resolve the overheating problem. In this way, the SN may select, from the assistance information provided by the MN, the communications parameter used to resolve the overheating problem of the terminal device, so as to configure the communications parameter for the terminal device. When the terminal device works in the MR-DC scenario, after the overheating problem occurs, the SN can configure a proper maximum quantity of MIMO layers, a proper maximum quantity of SCells, or a proper maximum aggregated bandwidth for the terminal device, to help the terminal device alleviate the overheating problem. When the overheating problem of the terminal device is resolved, the MN may further notify the SN that the overheating problem of the terminal device is resolved, and may restore a configuration of a maximum capability supported by the terminal device or a configuration used when the terminal device is originally connected to the MN and the SN.

With reference to the first aspect and the foregoing implementations, in some possible implementations, the second message further includes a band combination list, and the band combination list includes at least one band combination configured by the second network device for the terminal device.

With reference to the first aspect and the foregoing implementations, in some possible implementations, the second message further includes first information, and the first information is used to indicate a maximum quantity of uplink secondary cells and/or a maximum quantity of downlink secondary cells that are/is configured by the second network device for the terminal device.

With reference to the first aspect and the foregoing implementations, in some possible implementations, the second message further includes second information, the second information is used to indicate a maximum quantity of secondary cells that is reported by the terminal device in the first overheating assistance information, and the maximum quantity of secondary cells includes a maximum quantity of uplink secondary cells and/or a maximum quantity of downlink secondary cells.

With reference to the first aspect and the foregoing implementations, in some possible implementations, the second message further includes third information, and the third information is used to indicate maximum quantities of uplink MIMO layers and/or maximum quantities of downlink MIMO layers, of serving cells in different frequency ranges, that the terminal device prefers to be configured.

With reference to the first aspect and the foregoing implementations, in some possible implementations, the third information is further used to indicate that maximum quantities of uplink MIMO layers and maximum quantities of downlink MIMO layers, of serving cells in different frequency ranges, that are configured by the second network device for the terminal device are not restricted.

With reference to the first aspect and the foregoing implementations, in some possible implementations, the second message further includes fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list includes at least one aggregated bandwidth value.

With reference to the first aspect and the foregoing implementations, in some possible implementations, the fourth information is further used to indicate that maximum aggregated bandwidth values across an uplink carrier and maximum aggregated bandwidth values across a downlink carrier that are configured by the second network device for the terminal device in different frequency ranges are not restricted.

With reference to the first aspect and the foregoing implementations, in some possible implementations, the second message further includes fifth information, and the fifth information is used to indicate a maximum aggregated bandwidth value reported by the terminal device in the first overheating assistance information.

With reference to the first aspect and the foregoing implementations, in some possible implementations, the second message further includes sixth information, and the sixth information is used to indicate that the terminal device encounters an overheating problem.

With reference to the first aspect and the foregoing implementations, in some possible implementations, the second message further includes seventh information, and the seventh information is used to indicate that the overheating problem of the terminal device is resolved.

With reference to the first aspect and the foregoing implementations, in some possible implementations, when the terminal device encounters an overheating problem, the second message further includes second overheating assistance information, and the second overheating assistance information includes at least one of the first information, the second information, the third information, the fourth information, and the fifth information; and when the overheating problem of the terminal device is resolved, the second overheating assistance information includes no information.

With reference to the first aspect and the foregoing implementations, in some possible implementations, the first network device is a master node device in dual connectivity, the second network device is a secondary node device in dual connectivity, the second message is a secondary node modification request message, and the third message is a secondary node modification request response message.

According to a second aspect, an information transmission method is provided, including: A second network device receives a second message sent by a first network device, where the second message is used to indicate the second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and the second network device configures the communications parameter for the terminal device based on the second message.

With reference to the second aspect, in some possible implementations, the method further includes: The second network device determines a third message based on the communications parameter; and the second network device sends the third message to the first network device, where the third message is a response message for the second message, and the third message is used to indicate a communications parameter configured by the second network device for the terminal device.

With reference to the second aspect and the foregoing implementations, in some possible implementations, the second message further includes a band combination list, and the band combination list includes at least one band combination configured by the second network device for the terminal device.

With reference to the second aspect and the foregoing implementations, in some possible implementations, the second message further includes first information, and the first information is used to indicate a maximum quantity of uplink secondary cells and/or a maximum quantity of downlink secondary cells that are/is configured by the second network device for the terminal device.

With reference to the second aspect and the foregoing implementations, in some possible implementations, the second message further includes second information, and the second information is used to indicate a maximum quantity of secondary cells that is reported by the terminal device in the first overheating assistance information.

With reference to the second aspect and the foregoing implementations, in some possible implementations, the second message further includes third information, and the third information is used to indicate maximum quantities of uplink MIMO layers and/or maximum quantities of downlink MIMO layers, of serving cells in different frequency ranges, that the terminal device prefers to be configured.

With reference to the second aspect and the foregoing implementations, in some possible implementations, the third information is further used to indicate that maximum quantities of uplink MIMO layers and maximum quantities of downlink MIMO layers, of serving cells in different frequency ranges, that are configured by the second network device for the terminal device are not restricted.

With reference to the second aspect and the foregoing implementations, in some possible implementations, the second message further includes fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list includes at least one aggregated bandwidth value.

With reference to the second aspect and the foregoing implementations, in some possible implementations, the fourth information is further used to indicate that maximum aggregated bandwidth values across an uplink carrier and maximum aggregated bandwidth values across a downlink carrier that are configured by the second network device for the terminal device in different frequency ranges are not restricted.

With reference to the second aspect and the foregoing implementations, in some possible implementations, the second message further includes fifth information, and the fifth information is used to indicate a maximum aggregated bandwidth value reported by the terminal device in the first overheating assistance information.

With reference to the second aspect and the foregoing implementations, in some possible implementations, the second message further includes sixth information, and the sixth information is used to indicate that the terminal device encounters an overheating problem.

With reference to the second aspect and the foregoing implementations, in some possible implementations, the second message further includes seventh information, and the seventh information is used to indicate that the overheating problem of the terminal device is resolved.

With reference to the second aspect and the foregoing implementations, in some possible implementations, when the terminal device encounters an overheating problem, the second message further includes second overheating assistance information, and the second overheating assistance information includes at least one of the first information, the second information, the third information, the fourth information, and the fifth information; and when the overheating problem of the terminal device is resolved, the second overheating assistance information includes no information.

With reference to the second aspect and the foregoing implementations, in some possible implementations, the first network device is a master node device in dual connectivity, the second network device is a secondary node device in dual connectivity, the second message is a secondary node modification request message, and the third message is a secondary node modification request response message.

According to a third aspect, a communications apparatus is provided, including: a receiving unit, configured to receive a first message sent by a terminal device, where the first message includes first overheating assistance information, and the first overheating assistance information is used to indicate whether the terminal device is overheated; a processing unit, configured to determine a second message based on the first overheating assistance information, where the second message is used to indicate a second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and a sending unit, configured to send the second message to the second network device.

With reference to the third aspect, in some possible implementations, the receiving unit is further configured to receive a third message sent by the second network device, where the third message is a response message for the second message, and the third message is used to indicate a communications parameter configured by the second network device for the terminal device.

With reference to the third aspect and the foregoing implementations, in some possible implementations, the second message further includes a band combination list, and the band combination list includes at least one band combination configured by the second network device for the terminal device.

With reference to the third aspect and the foregoing implementations, in some possible implementations, the second message further includes first information, and the first information is used to indicate a maximum quantity of uplink secondary cells and/or a maximum quantity of downlink secondary cells that are/is configured by the second network device for the terminal device.

With reference to the third aspect and the foregoing implementations, in some possible implementations, the second message further includes second information, and the second information is used to indicate a maximum quantity of secondary cells that is reported by the terminal device in the first overheating assistance information.

With reference to the third aspect and the foregoing implementations, in some possible implementations, the second message further includes third information, and the third information is used to indicate maximum quantities of uplink MIMO layers and/or maximum quantities of downlink MIMO layers, of serving cells in different frequency ranges, that the terminal device prefers to be configured.

With reference to the third aspect and the foregoing implementations, in some possible implementations, the third information is further used to indicate that maximum quantities of uplink MIMO layers and maximum quantities of downlink MIMO layers, of serving cells in different frequency ranges, that are configured by the second network device for the terminal device are not restricted.

With reference to the third aspect and the foregoing implementations, in some possible implementations, the second message further includes fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list includes at least one aggregated bandwidth value.

With reference to the third aspect and the foregoing implementations, in some possible implementations, the fourth information is further used to indicate that maximum aggregated bandwidth values across an uplink carrier and maximum aggregated bandwidth values across a downlink carrier that are configured by the second network device for the terminal device in different frequency ranges are not restricted.

With reference to the third aspect and the foregoing implementations, in some possible implementations, the second message further includes fifth information, and the fifth information is used to indicate a maximum aggregated bandwidth value reported by the terminal device in the first overheating assistance information.

With reference to the third aspect and the foregoing implementations, in some possible implementations, the second message further includes sixth information, and the sixth information is used to indicate that the terminal device encounters an overheating problem.

With reference to the third aspect and the foregoing implementations, in some possible implementations, the second message further includes seventh information, and the seventh information is used to indicate that the overheating problem of the terminal device is resolved.

With reference to the third aspect and the foregoing implementations, in some possible implementations, when the terminal device encounters an overheating problem, the second message further includes second overheating assistance information, and the second overheating assistance information includes at least one of the first information, the second information, the third information, the fourth information, and the fifth information; and when the overheating problem of the terminal device is resolved, the second overheating assistance information includes no information.

With reference to the third aspect and the foregoing implementations, in some possible implementations, the communications apparatus is a master node device in dual connectivity, the second network device is a secondary node device in dual connectivity, the second message is a secondary node modification request message, and the third message is a secondary node modification request response message.

According to a fourth aspect, a communications apparatus is provided, including: a receiving unit, configured to receive a second message sent by a first network device, where the second message is used to indicate the second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and a processing unit, configured to configure the communications parameter for the terminal device based on the second message.

With reference to the fourth aspect, in some possible implementations, the processing unit is further configured to determine a third message based on the communications parameter; and the apparatus further includes a sending unit, configured to send the third message to the first network device, where the third message is a response message for the second message, and the third message is used to indicate a communications parameter configured by the second network device for the terminal device.

With reference to the fourth aspect and the foregoing implementations, in some possible implementations, the second message further includes a band combination list, and the band combination list includes at least one band combination configured by the second network device for the terminal device.

With reference to the fourth aspect and the foregoing implementations, in some possible implementations, the second message further includes first information, and the first information is used to indicate a maximum quantity of uplink secondary cells and/or a maximum quantity of downlink secondary cells that are/is configured by the second network device for the terminal device.

With reference to the fourth aspect and the foregoing implementations, in some possible implementations, the second message further includes second information, and the second information is used to indicate a maximum quantity of secondary cells that is reported by the terminal device in the first overheating assistance information.

With reference to the fourth aspect and the foregoing implementations, in some possible implementations, the second message further includes third information, and the third information is used to indicate maximum quantities of uplink MIMO layers and/or maximum quantities of downlink MIMO layers, of serving cells in different frequency ranges, that the terminal device prefers to be configured.

With reference to the fourth aspect and the foregoing implementations, in some possible implementations, the third information is further used to indicate that maximum quantities of uplink MIMO layers and maximum quantities of downlink MIMO layers, of serving cells in different frequency ranges, that are configured by the second network device for the terminal device are not restricted.

With reference to the fourth aspect and the foregoing implementations, in some possible implementations, the second message further includes fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list includes at least one aggregated bandwidth value.

With reference to the fourth aspect and the foregoing implementations, in some possible implementations, the fourth information is further used to indicate that maximum aggregated bandwidth values across an uplink carrier and maximum aggregated bandwidth values across a downlink carrier that are configured by the second network device for the terminal device in different frequency ranges are not restricted.

With reference to the fourth aspect and the foregoing implementations, in some possible implementations, the second message further includes fifth information, and the fifth information is used to indicate a maximum aggregated bandwidth value reported by the terminal device in the first overheating assistance information.

With reference to the fourth aspect and the foregoing implementations, in some possible implementations, the second message further includes sixth information, and the sixth information is used to indicate that the terminal device encounters an overheating problem.

With reference to the fourth aspect and the foregoing implementations, in some possible implementations, the second message further includes seventh information, and the seventh information is used to indicate that the overheating problem of the terminal device is resolved.

With reference to the fourth aspect and the foregoing implementations, in some possible implementations, when the terminal device encounters an overheating problem, the second message further includes second overheating assistance information, and the second overheating assistance information includes at least one of the first information, the second information, the third information, the fourth information, and the fifth information; and when the overheating problem of the terminal device is resolved, the second overheating assistance information includes no information.

With reference to the fourth aspect and the foregoing implementations, in some possible implementations, the first network device is a master node device in dual connectivity, the communications apparatus is a secondary node device in dual connectivity, the second message is a secondary node modification request message, and the third message is a secondary node modification request response message.

According to a fifth aspect, an information transmission method is provided, applied to a network architecture that includes a central unit CU and a distributed unit DU, and including: The central unit receives a first message sent by a terminal device, where the first message includes overheating assistance information, and the overheating assistance information is used to indicate whether the terminal device is overheated; the central unit determines a second message based on the overheating assistance information, where the second message is used to indicate the distributed unit to adjust a communications parameter configured for the terminal device, and the communications parameter includes a quantity of uplink multiple-input multiple-output layers MIMO layers and/or a quantity of downlink MIMO layers; and the central unit sends the second message to the distributed unit.

Optionally, the first message is an overheating message sent by the terminal device to the CU. When the overheating message includes the overheating assistance information, the overheating assistance information may include a maximum quantity of MIMO layers that is currently supported by the terminal device, and the maximum quantity of MIMO layers is a parameter configuration that can be used to resolve an overheating problem of the terminal device.

It should be understood that, when establishing a connection to a base station, the terminal device reports a maximum capability of the terminal device in a normal state to the base station. A communications parameter reported by the terminal device in an overheating case is less than a communications parameter corresponding to the maximum capability of the terminal device in the normal state.

For example, a supported maximum quantity of MIMO layers that is reported by the terminal device in the normal state to the CU is 4. In other words, a maximum quantity of MIMO layers that is configured by each of the CU and the DU for the terminal device is 4. When the terminal device is overheated, the overheating assistance information sent by the terminal device to the CU indicates that a maximum quantity of MIMO layers that the terminal device currently prefers to be temporarily configured is 2. In other words, the overheating problem of the terminal device can be resolved only when a maximum quantity of MIMO layers that is configured by each of the CU and the DU for the terminal device is less than or equal to 2.

According to the foregoing technical solutions, when the terminal device encounters the overheating problem in a CU-DU network, after the CU receives the overheating message reported by the terminal device, the CU may reconfigure a maximum quantity of MIMO layers for the terminal device. In addition, the DU can learn of the maximum quantity of MIMO layers that is currently configured by the CU for the terminal device. This ensures that during data transmission scheduled for the terminal device, a maximum quantity of MIMO layers that is configured for the terminal device does not exceed the maximum quantity of MIMO layers that is configured by the CU for the terminal device, thereby resolving the overheating problem of the terminal device.

With reference to the fifth aspect, in some possible implementations, the second message includes the overheating assistance information, the overheating assistance information includes first information, and the first information is used to indicate maximum quantities of uplink MIMO layers and/or maximum quantities of downlink MIMO layers, of serving cells in different frequency ranges, that the terminal device prefers to be configured.

With reference to the fifth aspect and the foregoing implementations, in some possible implementations, the second message includes the overheating assistance information, and the overheating assistance information includes no information.

With reference to the fifth aspect and the foregoing implementations, in some possible implementations, the method further includes: The central unit receives a third message sent by the distributed unit, where the third message is a response message for the second message.

With reference to the fifth aspect and the foregoing implementations, in some possible implementations, the first message is a terminal device context modification request message, and the second message is a terminal device context modification response message.

With reference to the fifth aspect and the foregoing implementations, in some possible implementations, the second message includes second information, and the second information is used to indicate maximum quantities of uplink MIMO layers and/or maximum quantities of downlink MIMO layers, of serving cells in different frequency ranges, that are configured by the distributed unit for the terminal device.

According to a sixth aspect, an information transmission method is provided, applied to a network architecture that includes a central unit CU and a distributed unit DU, and including: The distributed unit receives a second message sent by the central unit, where the second message is used to indicate the distributed unit to adjust a communications parameter configured for the terminal device, and the communications parameter includes a quantity of uplink multiple-input multiple-output layers MIMO layers and/or a quantity of downlink MIMO layers; and the distributed unit configures a maximum quantity of MIMO layers for the terminal device based on the second message sent by the central unit.

With reference to the sixth aspect, in some possible implementations, the method further includes: The distributed unit determines a third message based on the maximum quantity of MIMO layers, where the third message is a response message for the second message; and the distributed unit sends the third message to the central unit.

With reference to the sixth aspect and the foregoing implementations, in some possible implementations, the second message includes the overheating assistance information, the overheating assistance information includes first information, and the first information is used to indicate maximum quantities of uplink MIMO layers and/or maximum quantities of downlink MIMO layers, of serving cells in different frequency ranges, that the terminal device prefers to be configured.

With reference to the sixth aspect and the foregoing implementations, in some possible implementations, the second message includes the overheating assistance information, and the overheating assistance information includes no information.

With reference to the sixth aspect and the foregoing implementations, in some possible implementations, the method further includes: The central unit receives a third message sent by the distributed unit, where the third message is a response message for the second message.

With reference to the sixth aspect and the foregoing implementations, in some possible implementations, the first message is a terminal device context modification request message, and the second message is a terminal device context modification response message.

With reference to the sixth aspect and the foregoing implementations, in some possible implementations, the second message includes second information, and the second information is used to indicate maximum quantities of uplink MIMO layers and/or maximum quantities of downlink MIMO layers, of serving cells in different frequency ranges, that are configured by the distributed unit for the terminal device.

According to a seventh aspect, a communications apparatus is provided, including: a receiving unit, configured to receive a first message sent by a terminal device, where the first message includes overheating assistance information, and the overheating assistance information is used to indicate whether the terminal device is overheated; a processing unit, configured to determine a second message based on the overheating assistance information, where the second message is used to indicate the distributed unit to adjust a communications parameter configured for the terminal device, and the communications parameter includes a quantity of uplink multiple-input multiple-output layers MIMO layers and/or a quantity of downlink MIMO layers; and a sending unit, configured to send the second message to the distributed unit.

With reference to the seventh aspect, in some possible implementations, the second message includes the overheating assistance information, the overheating assistance information includes first information, and the first information is used to indicate maximum quantities of uplink MIMO layers and/or maximum quantities of downlink MIMO layers, of serving cells in different frequency ranges, that the terminal device prefers to be configured.

With reference to the seventh aspect and the foregoing implementations, in some possible implementations, the second message includes the overheating assistance information, and the overheating assistance information includes no information.

With reference to the seventh aspect and the foregoing implementations, in some possible implementations, the receiving unit is further configured to receive a third message sent by the distributed unit, where the third message is a response message for the second message.

With reference to the seventh aspect and the foregoing implementations, in some possible implementations, the first message is a terminal device context modification request message, and the second message is a terminal device context modification response message.

With reference to the seventh aspect and the foregoing implementations, in some possible implementations, the second message includes second information, and the second information is used to indicate maximum quantities of uplink MIMO layers and/or maximum quantities of downlink MIMO layers, of serving cells in different frequency ranges, that are configured by the distributed unit for the terminal device.

According to an eighth aspect, a communications apparatus is provided, including: a receiving unit, configured to receive a second message sent by a central unit, where the second message is used to indicate the distributed unit to adjust a communications parameter configured for the terminal device, and the communications parameter includes a quantity of uplink multiple-input multiple-output layers MIMO layers and/or a quantity of downlink MIMO layers; and a processing unit, configured to configure a maximum quantity of MIMO layers for the terminal device based on the second message sent by the central unit.

With reference to the eighth aspect and the foregoing implementations, in some possible implementations, the processing unit is further configured to determine a third message based on the maximum quantity of MIMO layers, where the third message is a response message for the second message; and the apparatus further includes a sending unit, configured to send the third message to the central unit.

With reference to the eighth aspect and the foregoing implementations, in some possible implementations, the second message includes the overheating assistance information, the overheating assistance information includes first information, and the first information is used to indicate maximum quantities of uplink MIMO layers and/or maximum quantities of downlink MIMO layers, of serving cells in different frequency ranges, that the terminal device prefers to be configured.

With reference to the eighth aspect and the foregoing implementations, in some possible implementations, the second message includes the overheating assistance information, and the overheating assistance information includes no information.

With reference to the eighth aspect and the foregoing implementations, in some possible implementations, the receiving unit is further configured to receive a third message sent by the distributed unit, where the third message is a response message for the second message.

With reference to the eighth aspect and the foregoing implementations, in some possible implementations, the first message is a terminal device context modification request message, and the second message is a terminal device context modification response message.

With reference to the eighth aspect and the foregoing implementations, in some possible implementations, the second message includes second information, and the second information is used to indicate maximum quantities of uplink MIMO layers and/or maximum quantities of downlink MIMO layers, of serving cells in different frequency ranges, that are configured by the distributed unit for the terminal device.

According to a ninth aspect, a communications apparatus is provided. The communications apparatus has a function of implementing the first network device (for example, a master base station) in the method design of the first aspect. The function may be implemented by using hardware, or may be implemented by hardware executing corresponding software. The hardware or the software includes one or more units corresponding to the foregoing function.

According to a tenth aspect, a communications apparatus is provided. The communications apparatus has a function of implementing the second network device (for example, a secondary base station) in the method design of the second aspect. The function may be implemented by using hardware, or may be implemented by hardware executing corresponding software. The hardware or the software includes one or more units corresponding to the foregoing function.

According to an eleventh aspect, a network device is provided, including a transceiver and a processor. Optionally, the network device further includes a memory. The processor is configured to control the transceiver to send and receive signals. The memory is configured to store a computer program. The processor is configured to invoke the computer program from the memory and run the computer program, so that the network device performs the method according to any one of the first aspect or the possible implementations of the first aspect.

According to a twelfth aspect, a network device is provided, including a transceiver and a processor. Optionally, the network device further includes a memory. The processor is configured to control the transceiver to send and receive signals. The memory is configured to store a computer program. The processor is configured to invoke the computer program from the memory and run the computer program, so that the network device performs the method according to any one of the second aspect or the possible implementations of the second aspect.

According to a thirteenth aspect, a network device is provided, including a transceiver and a processor. Optionally, the network device further includes a memory. The processor is configured to control the transceiver to send and receive signals. The memory is configured to store a computer program. The processor is configured to invoke the computer program from the memory and run the computer program, so that the network device performs the method according to any one of the third aspect or the possible implementations of the third aspect.

According to a fourteenth aspect, a network device is provided, including a transceiver and a processor. Optionally, the network device further includes a memory. The processor is configured to control the transceiver to send and receive signals. The memory is configured to store a computer program. The processor is configured to invoke the computer program from the memory and run the computer program, so that the network device performs the method according to any one of the fourth aspect or the possible implementations of the fourth aspect.

According to a fifteenth aspect, a communications system is provided. The system includes the communications apparatus in the third aspect and the communications apparatus in the fourth aspect. Alternatively, the system includes the communications apparatus in the seventh aspect and the communications apparatus in the eighth aspect.

According to a sixteenth aspect, a communications apparatus is provided. The communications apparatus may be the network device in the foregoing method designs, or may be a chip disposed in the network device. The communications apparatus includes a processor, which is coupled to a memory and may be configured to execute instructions in the memory, to implement the method performed by the network device in any one of the first aspect or the possible implementations of the first aspect, or implement the method performed by the network device in any one of the fifth aspect or the possible implementations of the fifth aspect. Optionally, the communications apparatus further includes the memory. Optionally, the communications apparatus further includes a communications interface, and the processor is coupled to the communications interface.

When the communications apparatus is a terminal device, the communications interface may be a transceiver or an input/output interface.

When the communications apparatus is the chip disposed in the terminal device, the communications interface may be an input/output interface.

Optionally, the transceiver may be a transceiver circuit. Optionally, the input/output interface may be an input/output circuit.

According to a seventeenth aspect, a communications apparatus is provided. The communications apparatus may be the network device in the foregoing method designs, or may be a chip disposed in the network device. The communications apparatus includes a processor, which is coupled to a memory and may be configured to execute instructions in the memory, to implement the method performed by the network device in any one of the second aspect or the possible implementations of the second aspect, or implement the method performed by the network device in any one of the sixth aspect or the possible implementations of the sixth aspect. Optionally, the communications apparatus further includes the memory. Optionally, the communications apparatus further includes a communications interface, and the processor is coupled to the communications interface.

When the communications apparatus is the network device, the communications interface may be a transceiver or an input/output interface.

When the communications apparatus is the chip disposed in the network device, the communications interface may be an input/output interface.

Optionally, the transceiver may be a transceiver circuit. Optionally, the input/output interface may be an input/output circuit.

According to an eighteenth aspect, a computer program product is provided. The computer program product includes computer program code, and when the computer program code is run on a computer, the computer is enabled to perform the methods in the foregoing aspects.

According to a nineteenth aspect, a computer-readable medium is provided. The computer-readable medium stores program code, and when the computer program code is run on a computer, the computer is enabled to perform the methods in the foregoing aspects.

According to a twentieth aspect, an information transmission method is provided, including: A first network device receives a first message sent by a terminal device, where the first message includes first overheating assistance information, including assistance information used to reduce power consumption; and the first network device determines a second message based on the first overheating assistance information, where the second message is used to indicate a second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth.

With reference to the twentieth aspect, in some possible implementations, the first message is a message that is sent by the terminal device to an MN and that is used to reduce power consumption.

With reference to the twentieth aspect, in some possible implementations, the message includes assistance information, the assistance information may include a communications parameter that the terminal device currently prefers to be configured, and the communications parameter is a parameter configuration that can be used to reduce power consumption of the terminal device. The assistance information may include a communications parameter that the terminal device currently prefers to be configured, and the communications parameter is a parameter configuration that can be used to reduce power consumption of the terminal device. For example, the assistance information may include one or more of the following: a quantity of MIMO layers, an aggregated bandwidth, and a quantity of secondary cells that are preferred by the terminal device.

With reference to the twentieth aspect, in some possible implementations, a maximum quantity of MIMO layers (which includes at least one of a maximum quantity of uplink MIMO layers of a serving cell in an FR 1, a maximum quantity of downlink MIMO layers of the serving cell in the FR 1, a maximum quantity of uplink MIMO layers of a serving cell in an FR 2, and a maximum quantity of downlink MIMO layers of the serving cell in the FR 2) in the assistance information may be a maximum quantity of MIMO layers, of a serving cell of an SCG, that the terminal device prefers to be configured by an SN, or may be a maximum quantity of MIMO layers, of a serving cell of an MCG, that the terminal device prefers to be configured by an MN, or may be a maximum quantity of MIMO layers, of a serving cell of an MCG, that the terminal device prefers to be configured by an MN, and be a maximum quantity of MIMO layers, of a serving cell of an SCG, that the terminal device prefers to be configured by an SN. Alternatively, maximum quantities of MIMO layers in the assistance information may include a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN.

With reference to the twentieth aspect, in some possible implementations, a maximum aggregated bandwidth (including at least one of a maximum uplink aggregated bandwidth across an uplink carrier in an FR 1, a maximum downlink aggregated bandwidth across a downlink carrier in the FR 1, a maximum uplink aggregated bandwidth across an uplink carrier in an FR 2, and a maximum downlink aggregated bandwidth across a downlink carrier in the FR 2) in the assistance information may be a maximum aggregated bandwidth value, across a carrier, that the terminal device prefers to be configured by an SN, or may be a maximum sum of an aggregated bandwidth, across a carrier, that the terminal device prefers to be configured by an MN and an aggregated bandwidth, across a carrier, that the terminal device prefers to be configured by an SN.

With reference to the twentieth aspect, in some possible implementations, the communications parameter may include at least one of the following parameters that the terminal device prefers to be temporarily configured: a maximum quantity of uplink secondary cells (Scell), a maximum quantity of downlink secondary cells (Scell), a maximum quantity of uplink MIMO layers of a serving cell in a frequency range FR 1 (a frequency band < 6 GHz), a maximum quantity of downlink MIMO layers of the serving cell in the FR 1, a maximum quantity of uplink MIMO layers of a serving cell in a frequency range FR 2 (a frequency band > 6 GHz), a maximum quantity of downlink MIMO layers of the serving cell in the FR 2, a maximum uplink aggregated bandwidth across an uplink carrier in the FR 1, a maximum downlink aggregated bandwidth across a downlink carrier in the FR 1, a maximum uplink aggregated bandwidth across an uplink carrier in the FR 2, and a maximum downlink aggregated bandwidth across a downlink carrier in the FR 2.

In addition, various possible implementations with reference to the first aspect may be combined with the twentieth aspect, to further satisfy a power consumption reduction requirement of the terminal device.

Therefore, in the twentieth aspect, when the terminal device expects to reduce power consumption, the terminal device uses the assistance information for reducing power consumption to carry a currently supported communications parameter. When the terminal device does not expect to reduce power consumption, the assistance information includes no information. Therefore, a base station may determine, based on whether the assistance information used to reduce power consumption carries information, whether the terminal device currently expects to reduce power consumption.

In addition, in some other aspects, this application further provides a terminal device, an apparatus (for example, a chip), a computer storage device, or a computer program product, to implement the method in the twentieth aspect.

### BRIEF DESCRIPTION OF DRAWINGS

FIG. 1 is a schematic architectural diagram of a mobile communications system applicable to an embodiment of this application;
FIG. 2(a) to FIG. 2(d) are a schematic architectural diagram of a multi-radio dual connectivity communications system according to an embodiment of this application;
FIG. 3 is a schematic diagram of interaction between a base station and a terminal device that is overheated according to an embodiment of this application;
FIG. 4 is a schematic interaction diagram of an information transmission method according to an embodiment of this application;
FIG. 5(a) and FIG. 5(b) are a schematic architectural diagram of a communications system in which a CU and a DU are separated according to an embodiment of this application;
FIG. 6 is a schematic interaction diagram of an information transmission method according to an embodiment of this application;
FIG. 7 is a schematic block diagram of a communications apparatus according to an embodiment of this application;
FIG. 8 is a schematic block diagram of another communications apparatus according to an embodiment of this application;
FIG. 9 is a schematic block diagram of another communications apparatus according to an embodiment of this application;
FIG. 10 is a schematic block diagram of another communications apparatus according to an embodiment of this application; and
FIG. 11 is a schematic structural diagram of a network device according to an embodiment of this application.

### DESCRIPTION OF EMBODIMENTS

The following describes technical solutions of this application with reference to the accompanying drawings.

The technical solutions in the embodiments of this application may be applied to various communications systems, for example, a long term evolution (long term evolution, LTE) system, an LTE frequency division duplex (frequency division duplex, FDD) system, an LTE time division duplex (time division duplex, TDD) system, a 5th generation (5th generation, 5G) mobile communications system or a new radio (new radio, NR) communications system, and a future mobile communications system.

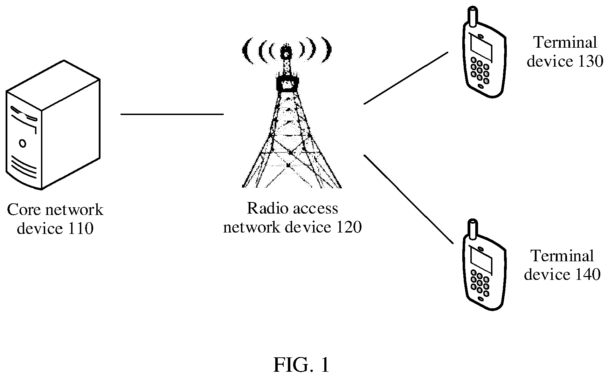

FIG. 1 is a schematic architectural diagram of a mobile communications system applicable to an embodiment of this application. As shown in FIG. 1, the mobile communications system 100 may include a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be different physical devices independent of each other, or a function of the core network device and a logical function of the radio access network device may be integrated into one physical device, or a part of functions of the core network device and a part of functions of the radio access network device may be integrated into one physical device. The terminal device may be fixed, or may be movable. FIG. 1 is merely a schematic diagram. The communications system may further include another network device, for example, may further include a wireless relay device and a wireless backhaul device, which are not shown in FIG. 1. Quantities of core network devices, radio access network devices, and terminal devices included in the mobile communications system are not limited in the embodiments of this application.

In the mobile communications system 100, the radio access network device 120 is an access device through which the terminal device accesses the mobile communications system in a wireless manner. The radio access network device 120 may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a gNodeB (gNodeB, gNB) in an NR system, or a component or a part of a device included in a base station, for example, a central unit (central unit, CU), a distributed unit (distributed unit, DU), or a baseband unit (baseband unit, BBU). It should be understood that a specific technology and a specific device form used by the radio access network device are not limited in the embodiments of this application. In this application, the radio access network device is briefly referred to as a network device. Unless otherwise specified, in this application, all network devices are radio access network devices. In this application, the network device may be a network device, or may be a chip used in a network device to complete a wireless communication processing function.

The terminal device in the mobile communications system 100 may also be referred to as a terminal, user equipment (user equipment, UE), a mobile station (mobile station, MS), a mobile terminal (mobile terminal, MT), or the like. The terminal device in the embodiments of this application may be a mobile phone (mobile phone), a tablet computer (Pad), a computer with a wireless transceiver function, or a wireless terminal device applied to scenarios such as virtual reality (virtual reality, VR), augmented reality (augmented reality, AR), industrial control (industrial control), self-driving (self-driving), telemedicine (remote medical), a smart grid (smart grid), transportation safety (transportation safety), a smart city (smart city), and a smart home (smart home). In this application, the foregoing terminal device and a chip that can be used in the foregoing terminal device are collectively referred to as a terminal device. It should be understood that a specific technology and a specific device form that are used by the terminal device are not limited in the embodiments of this application.

The embodiments of this application is applicable to downlink data transmission, uplink data transmission, or device-to-device (device to device, D2D) data transmission. For downlink data transmission, a data sending device is a network device, and a data receiving device is a terminal device. After receiving downlink data, the terminal device sends feedback information to the network device, to notify the network device whether the downlink data is correctly received by the terminal device. For uplink data transmission, a data sending device is a terminal device, and a data receiving device is a network device. After receiving uplink data, the network device sends feedback information to the terminal device, to notify the terminal device whether the uplink data is correctly received by the network device. For D2D signal transmission, a data sending device is a terminal device, and a data receiving device is also a terminal device. A data transmission direction is not limited in the embodiments of this application.

In an initial phase of a 5th generation (the fifth generation, 5G) mobile communications system, because a 4th generation (the forth generation, 4G) mobile communications system network and a 5G new radio (new radio, NR) communications system network coexist, to make full use of an existing 4G network, an operator deploys a network that provides service transmission for a terminal device through both a 4G access network, that is, an evolved UMTS terrestrial radio access network (evolved UMTS terrestrial radio access network, E-UTRAN), and a 5G access network (NR). In addition, a network that provides service transmission for a terminal device through two 5G NR access networks may also be deployed. This type of network architecture in which two access network devices provide service transmission for a terminal device is referred to as multi-radio dual connectivity (multi-radio dual connectivity, MR-DC).

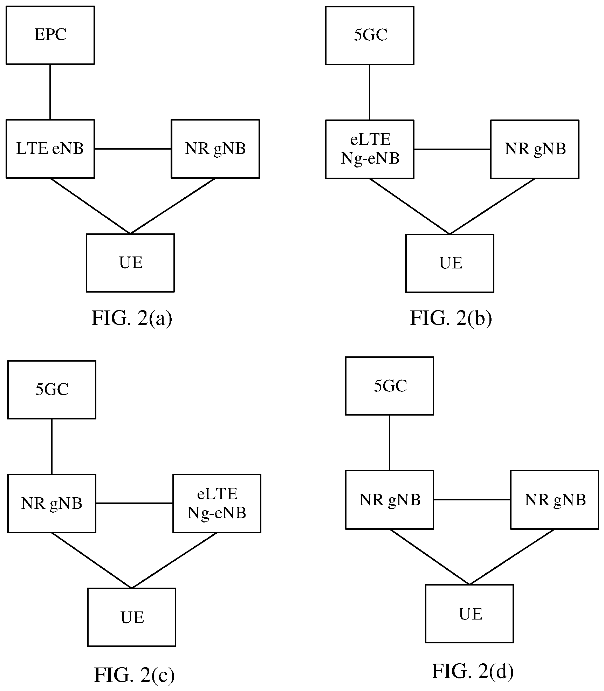

Specifically, in a network architecture shown in FIG. 2(a), an LTE eNB (eNB) is used as a master node (master node), an NR gNB (gNB) is used as a secondary node (secondary node), and the master node is connected to a 4G evolved packet core (evolved packet core, EPC) network. This is E-UTRAN-NR dual connectivity (E-UTRAN-NR dual connectivity, EN-DC).

In a network architecture shown in FIG. 2(b), an evolved LTE Ng-eNB (next generation evolved NodeB, Ng-eNB) is used as a master node, an NR gNB (gNB) is used as a secondary node, and the master node is connected to a 5G core (5G core, 5GC) network. This is NG-RAN E-UTRA-NR dual connectivity (NG-RAN E-UTRA-NR dual connectivity, NGEN-DC).

In a network architecture shown in FIG. 2(c), an NR gNB is used as a master node, an LTE Ng-eNB is used as a secondary node, and the master node is connected to a 5G core network. This is NR-E-UTRA dual connectivity (NR-E-UTRA dual connectivity, NE-DC).

In a network architecture shown in FIG. 2(d), an NR gNB is used as a master node, another NR gNB is used as a secondary node, and the master node is connected to a 5G core network. This is NR-NR dual connectivity (NR-NR dual connectivity, NR-DC).

As described in the background, in a case of high-speed data transmission, a terminal device may encounter an overheating problem. To resolve the overheating problem of the terminal device, it is specified in a current standard that after the terminal device encounters the overheating problem or the overheating problem is alleviated, the terminal device may send, to a base station, an overheating message (UE assistance information) carrying an overheating assistance (overheating assistance) information element. When the terminal device encounters the overheating problem, the overheating assistance information element includes an overheating assistance message provided by the terminal device. After the overheating problem of the terminal device is alleviated, the overheating assistance information element includes no overheating assistance message. In addition, when the terminal device expects to reduce power consumption, the terminal device may also send assistance information, to report, to the base station, a configuration expected by the terminal device.

For scenarios of the four different MR-DC network architectures described in FIG. 2(a) to FIG. 2(d), the terminal device reports different overheating assistance information. Specifically, when the terminal device works in a 4G standalone (long term evolution standard alone, LTE SA) scenario, the overheating assistance information may include an uplink (uplink, UL) classification or a downlink (downlink, DL) classification supported by the terminal device, and a maximum quantity of secondary cells (secondary cell, Scell) that is temporarily configured on a UL/DL and that is supported by the terminal device. When the terminal device works in an EN-DC scenario, the assistance information may include a maximum quantity that is of Scells temporarily configured on a UL/DL and that is supported by the terminal device, and the quantity of Scells is a sum of a quantity of Scells in LTE and a quantity of PScells/Scells in NR. The PScell is a secondary cell configured by a master node for the terminal device. When the terminal device works in a 5G standalone (new radio standard alone, NR SA) scenario, an NR gNB works independently, and the NR gNB is connected to a 5G core network. The assistance information may include a maximum quantity that is of Scells temporarily configured on a UL/DL and that is supported by the terminal device; a maximum quantity of MIMO layers that is in each frequency range (Frequency Range), that is temporarily configured on the UL/DL, and that is supported by the terminal device; and a maximum aggregated bandwidth that is in each frequency range FR, that is temporarily configured on the UL/DL, and that is supported by the terminal device.

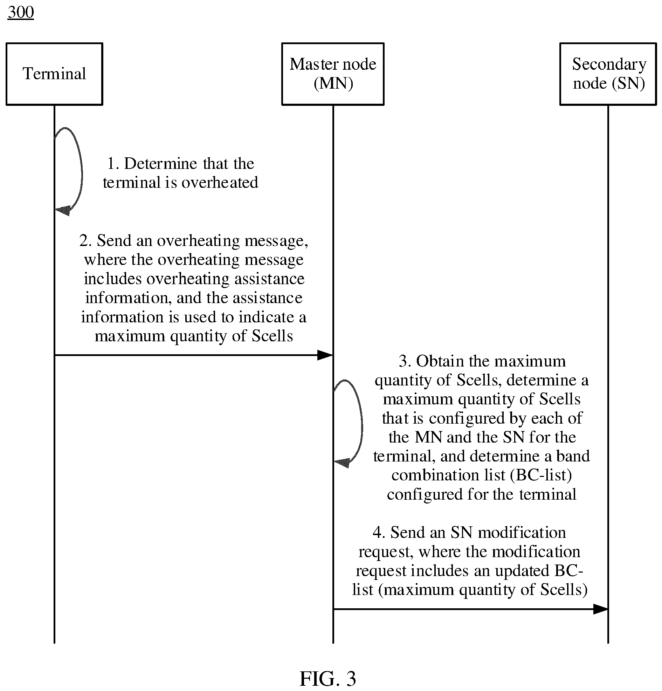

It can be learned that when the terminal device works in any MR-DC scenario in FIG. 2(a) to FIG. 2(d), and the terminal device encounters the overheating problem or needs to reduce power consumption, the terminal device reports, to a master node MN, a message that carries assistance information used to resolve the overheating problem or used to reduce power consumption. An example in which the terminal device encounters the overheating problem is used. FIG. 3 is a schematic diagram of interaction between a base station and a terminal device that is overheated according to an embodiment of this application. As shown in FIG. 3, the process includes the following steps.
1. The terminal device determines that overheating occurs.
2. The terminal device reports, to an MN, an overheating message carrying an overheating assistance information element, where the overheating message is used to indicate a maximum quantity of Scells that the terminal device prefers to be temporarily configured.
3. After receiving the overheating message reported by the terminal device, the MN obtains the maximum quantity of Scells in the overheating assistance information element. The MN determines a maximum quantity of Scells that is configured by each of the MN and an SN for the terminal device, and the MN determines, based on a capability of the terminal device, a band combination list (band combination list, BC-list) configured for the terminal device.
4. The MN sends a modification request (SN modification request) to the SN, where the modification request includes the BC-list determined by the MN, and the SN is notified of the BC-list.

It can be learned from the foregoing process that, after determining the maximum quantity of Scells that the SN can configure for the terminal device, the MN may limit, by setting proper allowed BC-list MR-DC, the maximum quantity of Scells that is configured by the SN for the terminal device, initiate an SN modification process, use an SN modification request message to carry updated allowed BC-List MR-DC, and send the SN modification request message to the SN. In this process, after the MN updates the allowed BC-list MR-DC to resolve an overheating problem of the terminal device by reducing a quantity of carriers, the SN cannot learn of an update cause of the MN. In a process in which the SN configures an Scell for the terminal device, the SN may request another quantity of Scells that cannot be used to resolve the overheating problem of the terminal device, and then the SN notifies the MN of the re-requested quantity of Scells, resulting in unnecessary signaling exchange between the MN and the SN. In addition, the allowed BC-list MR-DC cannot be used to separately limit a quantity of uplink carriers and a quantity of downlink carriers that the SN can configure for the terminal device. Therefore, using a modification request in an existing protocol to notify the SN of the quantity of Scells that the SN can configure for the terminal device cannot resolve the overheating problem of the terminal device.

In another possible case, after the terminal device encounters the overheating problem, or when the terminal device expects to reduce power consumption, the terminal device reports, to the MN, a message carrying assistance information. In this case, in addition to the foregoing temporarily configured maximum quantity of Scells that is supported by the terminal device, the message reported by the terminal device to the MN may further include a temporarily configured maximum quantity of MIMO layers that is supported by the terminal device and/or a temporarily configured maximum aggregated bandwidth that is supported by the terminal device. After the MN receives the temporarily configured maximum quantity of MIMO layers that is supported by the terminal device and/or the temporarily configured maximum aggregated bandwidth that is supported by the terminal device that are/is reported by the terminal device, the MN currently cannot notify the SN of the temporarily configured maximum quantity of MIMO layers that is supported by the terminal device and/or the temporarily configured maximum aggregated bandwidth that is supported by the terminal device, that is, the SN cannot learn of the maximum quantity of MIMO layers that can be temporarily configured for the terminal device or the maximum aggregated bandwidth that can be temporarily configured for the terminal device. Therefore, the overheating problem of the terminal device cannot be resolved, or power consumption of the terminal device cannot be reduced by modifying a configuration.

To resolve the overheating problem of the terminal device or reduce power consumption of the terminal device, this application provides an information transmission method. Through information exchange between network devices, a secondary node can learn that the terminal device encounters the overheating problem or the terminal device expects to reduce power consumption, and then configure a proper quantity of secondary cells, a proper maximum quantity of MIMO layers, and a proper maximum aggregated bandwidth for the terminal device, or uplink and/or downlink data transmission can be scheduled for the terminal device based on a maximum quantity of MIMO layers that is supported by the terminal device.

The following embodiment describes the method in this application by using an example in which a terminal encounters an overheating problem. It should be understood that, when the terminal expects to reduce power consumption, the terminal device may also send assistance information to a network device. For example, the assistance information may include a quantity of MIMO layers, an aggregated bandwidth, and a quantity of secondary cells that are preferred by the terminal device. Therefore, the method in the following embodiment is also applicable to resolving a power consumption problem of the terminal device.

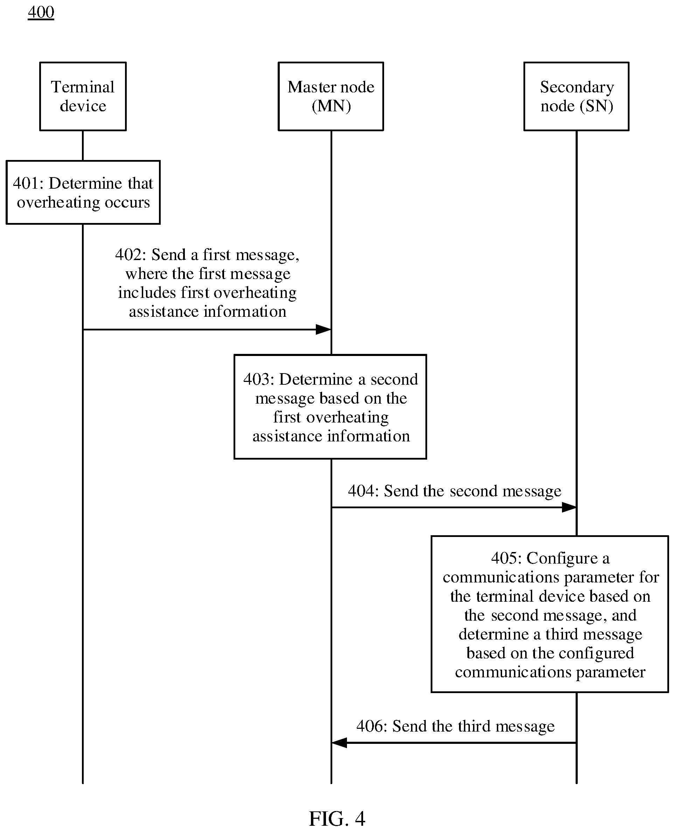

FIG. 4 is a schematic interaction diagram of an information transmission method 400 according to an embodiment of this application. Each step of the method 400 is described in detail below.

It should be understood that in this embodiment of this application, the method 400 is described by using an example in which the method 400 is performed by a terminal device and base stations (a master node MN and a secondary node SN). By way of example but not limitation, the method 400 may be performed by a chip used in the terminal device and chips used in the base stations.

S401: The terminal device determines that overheating occurs, or the terminal device expects to reduce power consumption.

S402: The terminal device sends a first message to the MN, where the first message includes first overheating assistance information, or the first message includes assistance information used to reduce power consumption.

Optionally, the first message is an overheating message sent by the terminal device to the MN. When the terminal device is overheated, the terminal device sends the overheating message to the MN. The overheating message includes overheating assistance information, the overheating assistance information may include a communications parameter currently supported by the terminal device, and the communications parameter is a parameter configuration that can be used to resolve an overheating problem of the terminal device.

Alternatively, the first message is a message that is sent by the terminal device to the MN and that is used to reduce power consumption. The message includes assistance information, the assistance information may include a communications parameter that the terminal device currently prefers to be configured, and the communications parameter is a parameter configuration that can be used to reduce power consumption of the terminal device.

For example, the communications parameter may include at least one of the following parameters that the terminal device prefers to be temporarily configured: a maximum quantity of uplink secondary cells (Scell), a maximum quantity of downlink secondary cells (Scell), a maximum quantity of uplink MIMO layers of a serving cell in a frequency range FR 1 (a frequency band < 6 GHz), a maximum quantity of downlink MIMO layers of the serving cell in the FR 1, a maximum quantity of uplink MIMO layers of a serving cell in a frequency range FR 2 (a frequency band > 6 GHz), a maximum quantity of downlink MIMO layers of the serving cell in the FR 2, a maximum uplink aggregated bandwidth across an uplink carrier in the FR 1, a maximum downlink aggregated bandwidth across a downlink carrier in the FR 1, a maximum uplink aggregated bandwidth across an uplink carrier in the FR 2, and a maximum downlink aggregated bandwidth across a downlink carrier in the FR 2.

It should be understood that when the terminal device establishes a connection to each of the MN and the SN, the MN and the SN may learn of a radio capability (radio capability) of the terminal device. A communications parameter reported by the terminal device when the terminal device is overheated or expects to reduce power consumption is less than a communications parameter corresponding to the radio capability.

For example, based on the radio capability of the terminal device, when the terminal device is not overheated, the terminal device can support 31 SCells. When the terminal device is overheated, the overheating assistance information sent by the terminal device to the MN indicates that a maximum quantity of Scells that the terminal device currently prefers to be temporarily configured is 6. In other words, the overheating problem of the terminal device can be resolved only when a sum of quantities of Scells that are configured by the MN and the SN for the terminal device is less than or equal to 6.

For another example, based on the radio capability of the terminal device, when the terminal device is not overheated, a maximum aggregated bandwidth, across an uplink carrier in the frequency range FR 1 (the frequency band < 6 GHz), that can be supported by the terminal device is 100M. In other words, a sum of maximum aggregated bandwidths, across the uplink carrier in the frequency range FR 1, that are configured by the MN and the SN for the terminal device is 100M. When the terminal device is overheated, the overheating assistance information sent by the terminal device to the MN indicates that a maximum aggregated bandwidth that the terminal device currently prefers to be temporarily configured is 20M. In other words, the overheating problem of the terminal device can be resolved only when a sum of maximum aggregated bandwidths that are configured by the MN and the SN for the terminal device is less than or equal to 20M.

For another example, based on the radio capability of the terminal device, when the terminal device is not overheated, a maximum quantity of uplink MIMO layers, of the serving cell in the frequency range FR 1 (the frequency band < 6 GHz), that can be supported by the terminal device is 4. In other words, a maximum quantity of uplink MIMO layers, of the serving cell in the frequency range FR 1 (the frequency band < 6 GHz), that is configured by each of the MN and the SN for the terminal device is 4. When the terminal device is overheated, the overheating assistance information sent by the terminal device to the MN indicates that a maximum quantity of uplink MIMO layers, of the serving cell in the frequency range FR 1 (the frequency band < 6 GHz), that the terminal device currently prefers to be temporarily configured is 2. In other words, the overheating problem of the terminal device can be resolved only when a maximum quantity of uplink MIMO layers, of the serving cell in the frequency range FR 1 (the frequency band < 6 GHz), that is configured by each of the MN and the SN for the terminal device is less than or equal to 2.

It should be further understood that, when the terminal device is overheated, or when the terminal device expects to reduce power consumption, in the plurality of MR-DC scenarios listed in FIG. 2(a) to FIG. 2(d), the assistance information used to reduce power consumption or the overheating assistance information that is reported by the terminal device to the MN may include at least one of a maximum quantity of Scells, a maximum quantity of MIMO layers, and a maximum aggregated bandwidth.

Optionally, a maximum quantity of MIMO layers (which includes at least one of the maximum quantity of uplink MIMO layers of the serving cell in the FR 1, the maximum quantity of downlink MIMO layers of the serving cell in the FR 1, the maximum quantity of uplink MIMO layers of the serving cell in the FR 2, and the maximum quantity of downlink MIMO layers of the serving cell in the FR 2) in the assistance information may be a maximum quantity of MIMO layers, of a serving cell of an SCG, that the terminal device prefers to be configured by the SN, or may be a maximum quantity of MIMO layers, of a serving cell of an MCG, that the terminal device prefers to be configured by the MN, or may be a maximum quantity of MIMO layers, of a serving cell of an MCG, that the terminal device prefers to be configured by the MN, and be a maximum quantity of MIMO layers, of a serving cell of an SCG, that the terminal device prefers to be configured by the SN. Alternatively, maximum quantities of MIMO layers in the assistance information may include a maximum quantity of MIMO layers, of a serving cell of an MCG, that the terminal device prefers to be configured by the MN, and a maximum quantity of MIMO layers, of a serving cell of an SCG, that the terminal device prefers to be configured by the SN.

Optionally, a maximum aggregated bandwidth (including at least one of the maximum uplink aggregated bandwidth across the uplink carrier in the FR 1, the maximum downlink aggregated bandwidth across the downlink carrier in the FR 1, the maximum uplink aggregated bandwidth across the uplink carrier in the FR 2, and the maximum downlink aggregated bandwidth across the downlink carrier in the FR 2) in the assistance information may be a maximum aggregated bandwidth value, across a carrier, that the terminal device prefers to be configured by the SN, or may be a maximum sum of an aggregated bandwidth, across a carrier, that the terminal device prefers to be configured by the MN and an aggregated bandwidth, across a carrier, that the terminal device prefers to be configured by the SN.

S403: The MN receives the first message sent by the terminal device, and determines a second message based on the assistance information used to reduce power consumption or the first overheating assistance information that is included in the first message.

S404: The MN sends the second message to the SN.

S405: The SN configures a communications parameter for the terminal device based on the second message sent by the MN, and determines a third message based on the configured communications parameter.

S406: The SN sends the third message to the MN.

It should be understood that, in S402, it is described that when the terminal device is overheated, the terminal device uses the overheating assistance information to carry the currently supported communications parameter. When the overheating problem of the terminal device is resolved, the overheating assistance information includes no information. Therefore, the MN may determine, based on whether the overheating assistance information carries information, whether the terminal device is overheated currently.

In addition, it should be understood that, when the terminal device expects to reduce power consumption, the terminal device uses the assistance information for reducing power consumption to carry the currently supported communications parameter. When the terminal device does not expect to reduce power consumption, the assistance information includes no information. Therefore, the MN may determine, based on whether the assistance information used to reduce power consumption carries information, whether the terminal device currently expects to reduce power consumption.

The MN receives the first message sent by the terminal device, and determines, based on the assistance information in the first message, that the terminal device encounters the overheating problem or the terminal device expects to reduce power consumption. After the MN determines that the terminal device encounters the overheating problem or expects to reduce power consumption, the MN and the SN need to configure a communications parameter for the terminal device based on a communications parameter expected by the terminal device, to resolve the overheating problem of the terminal device or reduce the power consumption of the terminal device. The MN may indicate, by using the second message, that the SN needs to adjust the communications parameter configured for the terminal device. For different types of communications parameters, the second message may correspondingly include different information. In addition, the SN notifies, by using the third message, the MN of the communications parameter configured for the terminal device. The third message may be understood as a response message for the second message. For different types of information included in the second message, the third message correspondingly includes different types of information.

Optionally, the second message is a secondary node modification request (S-Node modification request) message, and the third message is a secondary node modification request acknowledge (S-Node modification request acknowledge) message.

The following describes different content of the second message and the third message in this embodiment of this application based on three different communications parameters: a quantity of Scells, a quantity of MIMO layers, and an aggregated bandwidth.

### Case 1: quantity of Scells

In a possible implementation, the second message further includes a band combination list, and the band combination list includes at least one band combination configured by the second network device for the terminal device.

It should be understood that each band combination in the band combination (band combination) list is used to indicate a band that the SN can or is allowed to temporarily configure for the terminal device. If the overheating assistance information reported by the terminal device includes a maximum quantity of Scells that the terminal device prefers to be temporarily configured, the second message may include the band combination list.

For example, when the terminal device is not overheated, a maximum quantity of (P)Scells that is configured by a base station and that can be supported by the terminal device is 10. When the terminal device encounters the overheating problem, the terminal device reports, to the MN in the overheating assistance information, that a quantity of Scells that the terminal device currently prefers to be configured is 8. The MN may determine, based on 8 reported by the terminal device, that a quantity of Scells that can be configured by the SN for the terminal device is 2, 4, or 6, and the MN notifies, by using the second message, the SN of a band combination list corresponding to the quantity 2, 4, or 6 of (P)Scells. The SN may select a band combination from the band combination list. The SN configures a PSCell and an SCell for the terminal device based on the selected band combination.

When the second message includes the band combination list, the third message sent by the SN to the MN may include the band combination that the SN chooses to configure for the terminal device. The MN may determine, based on the band combination selected by the SN, a band combination that can be configured by the MN for the terminal device. The MN configures an SCell for the terminal device based on the band combination selected by the MN.

In another possible implementation, the second message further includes first information, and the first information is used to indicate a maximum quantity of uplink secondary cells and/or a maximum quantity of downlink secondary cells that are/is configured by the SN for the terminal device. Alternatively, the first information is used to indicate a set of maximum quantities of uplink secondary cells and/or maximum quantities of downlink secondary cells that the SN can or is allowed to configure for the terminal device. Specially, the set may include only one value.

For example, when the terminal device encounters the overheating problem, the terminal device reports, to the MN in the overheating assistance information, that a maximum quantity of uplink Scells that the terminal device currently prefers to be configured is 8. The MN may determine, based on 8 reported by the terminal device, that a maximum quantity of uplink Scells that can be configured by the SN for the terminal device is 4, and the MN notifies, by using the second message, the SN that the maximum quantity of uplink Scells that can be configured by the SN for the terminal device is 4. After the SN receives the second message, according to an indication of the MN, a sum of a quantity of uplink PSCells and a quantity of uplink Scells that are configured for the terminal device cannot exceed 4. Herein, the first information may indicate four Scells.

When the second message includes the first information described above, the third message sent by the SN to the MN may include the quantity 4 of Scells that the SN chooses to configure for the terminal device.

In another possible implementation, the second message further includes second information, and the second information is used to indicate a maximum quantity of uplink secondary cells and/or a maximum quantity of downlink secondary cells that are/is reported by the terminal device in the first overheating assistance information.

For example, when the terminal device encounters the overheating problem, the terminal device reports, to the MN in the overheating assistance information, that a maximum quantity of uplink Scells that the terminal device currently prefers to be configured is 8. The MN may determine a maximum quantity of uplink SCells that the MN expects to configure for the terminal device, for example, 5. In this case, a maximum quantity of uplink PSCells and SCells that the SN is allowed to configure for the terminal device is 3. The MN may notify, by using the second message, the SN of 8 reported by the terminal device and the maximum quantity 3 that the SN is allowed to configure for the terminal device. After the SN receives the two values, the SN may follow a decision of the MN, that is, configure a maximum of three uplink SCells for the terminal device, or may autonomously determine, based on the maximum quantity of uplink SCells that the terminal device prefers to be configured, a maximum quantity of uplink SCells that can be configured for the terminal device, for example, 5.

Optionally, when determining that the terminal device encounters the overheating problem, the MN may use the second message to carry sixth information, where the sixth information is used to indicate that the terminal device encounters the overheating problem.

For example, when the terminal device encounters the overheating problem, the MN notifies the SN of the included information indicating that the terminal device encounters the overheating problem, so that the SN can learn that the terminal device currently encounters the overheating problem. Therefore, when the MN sends a configurable quantity of Scells to the SN, the SN may directly perform configuration based on the quantity of Scells that is sent by the MN, and does not additionally apply for another quantity of Scells. This avoids redundant information exchange between the MN and the SN, and can resolve the existing overheating problem of the terminal device.

Optionally, when determining that the overheating problem of the terminal device is resolved, the MN may alternatively use the second message to carry seventh information, where the seventh information is used to indicate that the overheating problem of the terminal device is resolved.

Likewise, after the overheating problem of the terminal device is resolved, the MN notifies the SN of the included information indicating that the overheating problem of the terminal device is resolved, so that the SN can learn that the current overheating problem of the terminal device is resolved. Therefore, the SN may perform configuration based on a quantity of Scells that is sent by the MN, or apply for another quantity of Scells to configure an Scell for the terminal device, or configure an Scell for the terminal device based on a maximum capability supported by the terminal device when the terminal device is not overheated.

When the second message includes the first information, and a quantity that is indicated by the first information and that is of values in a set of maximum quantities of uplink secondary cells and/or maximum quantities of downlink secondary cells that the SN can or is allowed to configure for the terminal device is greater than 1, the third message sent by the SN to the MN may include a maximum quantity of uplink secondary cells and/or a maximum quantity of downlink secondary cells that are/is selected by the SN from the set and configured for the terminal device.

When the second message includes the first information and the second information, and a quantity that is indicated by the first information and that is of values in a set of maximum quantities of uplink secondary cells and/or maximum quantities of downlink secondary cells that the SN can or is allowed to configure for the terminal device is greater than 1, the third message sent by the SN to the MN may include a maximum quantity of uplink secondary cells and/or a maximum quantity of downlink secondary cells that are/is selected by the SN from the set and configured for the terminal device, and the third message sent by the SN to the MN may further include a maximum quantity of uplink secondary cells and/or a maximum quantity of downlink secondary cells that are/is determined by the SN based on the second information and that the SN requests the MN to configure for the terminal device. The requested maximum quantity of uplink secondary cells and/or maximum quantity of downlink secondary cells are/is not included in the set.

When the second message includes the band combination list, and a quantity of band combinations included in the list is greater than 1, the third message sent by the SN to the MN may include a band combination selected by the SN from the band combination list.

When the second message includes the band combination list and the second information, and a quantity of band combinations included in the list is greater than 1, the third message sent by the SN to the MN may include a band combination selected by the SN from the band combination list, and the third message sent by the SN to the MN may further include a band combination that is determined by the SN based on the second information and that is requested from the MN. The requested band combination is not included in the band combination list.

### Case 2: quantity of MIMO layers

In a possible implementation, the second message further includes third information, and the third information is used to indicate maximum quantities of uplink MIMO layers and/or maximum quantities of downlink MIMO layers, of serving cells in different frequency ranges, that the terminal device prefers to be configured.

For example, when the terminal device is not overheated, a maximum quantity of uplink MIMO layers that is configured by a base station and that can be supported by the terminal device is 6. When the terminal device encounters the overheating problem, the terminal device reports, to the MN in the overheating assistance information, that a maximum quantity of uplink MIMO layers, of the serving cell in the FR 1, that the terminal device currently prefers to be configured is 4. The MN may notify, by using the third information in the second message, the SN that a maximum quantity of uplink MIMO layers, of the serving cell in the FR 1, that is to be configured for the terminal device is 4.

It should be understood that, in this case, a maximum quantity of MIMO layers that is sent by the MN to the SN is a maximum quantity of MIMO layers that is reported by the terminal device. Therefore, the second message may include the quantity of MIMO layers that is reported by the terminal device and that the terminal device prefers to be configured. Optionally, maximum quantities of MIMO layers that are configured by the MN and the SN for the terminal device are equal, or the quantity of MIMO layers that is included in the second message, that is reported by the terminal device, and that the terminal device prefers to be configured is a maximum quantity of MIMO layers, of a serving cell of an SCG, that the terminal device prefers to be configured by the SN. In this case, the third message may include the maximum quantity of MIMO layers, or may not include the maximum quantity of MIMO layers. This is not limited in this application.

In another possible implementation, the third information is further used to indicate that maximum quantities of uplink MIMO layers and maximum quantities of downlink MIMO layers, of serving cells in different frequency ranges, that are configured by the second network device for the terminal device are not restricted.

Alternatively, a value in the third information is further used to indicate that the overheating problem of the terminal device is resolved or the terminal device no longer expects to reduce power consumption. A maximum quantity of uplink MIMO layers and a maximum quantity of downlink MIMO layers that can be configured by the second network device for the terminal device are no longer restricted to the maximum quantity of uplink MIMO layers and the maximum quantity of downlink MIMO layers that the first network device notifies the second network device to configure when the terminal device previously encounters the overheating problem or expects to reduce power consumption.

For example, after the MN receives the first message that is reported by the terminal device and that carries the overheating assistance information or the assistance information used to reduce power consumption, the MN initiates an SN modification process. The MN sends an S-Node modification request message to the SN. If the assistance information used to reduce power consumption or the overheating assistance information that is reported by the terminal device includes a maximum quantity of MIMO layers, of the serving cell in the FR 1, that the terminal device prefers to be temporarily configured, the S-Node modification request message may include the third information. Optionally, a value of the third information is a corresponding MIMO layer value reported by the terminal device in the overheating assistance information or the assistance information used to reduce power consumption.

The maximum quantity of MIMO layers, of the serving cell in the FR 1, that the terminal device prefers to be temporarily configured specifically includes: (1) the maximum quantity of uplink MIMO layers, of the serving cell in the FR 1, that the terminal device prefers to be temporarily configured, where a first value is used to indicate that a maximum quantity of uplink MIMO layers, of the serving cell in the FR 1, that can be configured for the terminal device is not restricted, that is, is the same as a maximum quantity of uplink MIMO layers that is reported by the terminal device in a terminal device capability report message and that can be supported by the terminal device.

Alternatively, the first value is used to indicate that the overheating problem of the terminal device is resolved, or the terminal device no longer expects to reduce power consumption. A maximum quantity of uplink MIMO layers, of the serving cell in the FR 1, that can be configured by the SN for the terminal device is no longer restricted to a maximum quantity of uplink MIMO layers that is of the serving cell in the FR 1, that can be configured by the SN for the terminal device, and that is notified by the MN to the SN when the terminal device previously encounters the overheating problem or expects to reduce power consumption.

The maximum quantity of MIMO layers, of the serving cell in the FR 1, that the terminal device prefers to be temporarily configured specifically includes: (2) the maximum quantity of downlink MIMO layers, of the serving cell in the FR 1, that the terminal device prefers to be temporarily configured, where a first value is used to indicate that a maximum quantity of downlink MIMO layers, of the serving cell in the FR 1, that can be configured for the terminal device is not restricted, that is, is the same as a maximum quantity of uplink MIMO layers that is reported by the terminal device in a terminal device capability report message and that can be supported by the terminal device.

Alternatively, the first value is used to indicate that the overheating problem of the terminal device is resolved, or the terminal device no longer expects to reduce power consumption. A maximum quantity of downlink MIMO layers, of the serving cell in the FR 1, that can be configured by the SN for the terminal device is no longer restricted to a maximum quantity of downlink MIMO layers that is of the serving cell in the FR 1, that can be configured by the SN for the terminal device, and that is notified by the MN to the SN when the terminal device previously encounters the overheating problem or expects to reduce power consumption.

Likewise, the maximum quantity of MIMO layers, of the serving cell in the FR 2, that the terminal device prefers to be temporarily configured specifically includes: (1) the maximum quantity of uplink MIMO layers, of the serving cell in the FR 2, that the terminal device prefers to be temporarily configured, where a first value is used to indicate that a maximum quantity of uplink MIMO layers, of the serving cell in the FR 2, that can be configured for the terminal device is not restricted, that is, is the same as a maximum quantity of uplink MIMO layers that is reported by the terminal device in a terminal device capability report message and that can be supported by the terminal device.

Alternatively, the first value is used to indicate that the overheating problem of the terminal device is resolved, or the terminal device no longer expects to reduce power consumption. A maximum quantity of uplink MIMO layers, of the serving cell in the FR 2, that can be configured by the SN for the terminal device is no longer restricted to a maximum quantity of uplink MIMO layers that is of the serving cell in the FR 2, that can be configured by the SN for the terminal device, and that is notified by the MN to the SN when the terminal device previously encounters the overheating problem or expects to reduce power consumption.

The maximum quantity of MIMO layers, of the serving cell in the FR 2, that the terminal device prefers to be temporarily configured specifically includes: (2) the maximum quantity of downlink MIMO layers, of the serving cell in the FR 2, that the terminal device prefers to be temporarily configured, where a first value is used to indicate that a maximum quantity of downlink MIMO layers, of the serving cell in the FR 2, that can be configured for the terminal device is not restricted, that is, is the same as a maximum quantity of uplink MIMO layers that is reported by the terminal device in a terminal device capability report message and that can be supported by the terminal device.

Alternatively, the first value is used to indicate that the overheating problem of the terminal device is resolved, or the terminal device no longer expects to reduce power consumption. A maximum quantity of downlink MIMO layers, of the serving cell in the FR 2, that can be configured by the SN for the terminal device is no longer restricted to a maximum quantity of downlink MIMO layers that is of the serving cell in the FR 2, that can be configured by the SN for the terminal device, and that is notified by the MN to the SN when the terminal device previously encounters the overheating problem or expects to reduce power consumption.

Optionally, the first value herein may be represented in a form of an information bit value, or indication information of "no restriction" is carried in the third information, to indicate that maximum quantities of MIMO layers, of serving cells at different frequencies, that can be configured for the terminal device are not restricted. This is not limited in this application.

Optionally, the second message further includes sixth information, and the sixth information is used to indicate that the terminal device encounters the overheating problem or the terminal device expects to reduce power consumption.

Optionally, the second message further includes seventh information, and the seventh information is used to indicate that the overheating problem of the terminal device is resolved or the terminal device no longer expects to reduce power consumption.

### Case 3: aggregated bandwidth

In a possible implementation, the second message further includes fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list includes at least one aggregated bandwidth value.

For example, after the MN receives the first message that is reported by the terminal device and that carries the overheating assistance information or the assistance information used to reduce power consumption, the MN initiates an SN modification process. The MN sends an S-Node modification request message to the SN. If the assistance information used to reduce power consumption or the overheating assistance information that is reported by the terminal device includes a maximum aggregated bandwidth, across a carrier in the FR 1, that the terminal device prefers to be temporarily configured, the S-Node modification request message includes the fourth information, which specifically includes:
(1) a list of maximum aggregated bandwidth values, across all uplink carriers in the FR 1, that the SN can or is allowed to temporarily configure for the terminal device, where
   optionally, the list of maximum aggregated bandwidth values may include only one value; or
(2) a list of maximum aggregated bandwidth values, across all downlink carriers in the FR 1, that the SN can or is allowed to temporarily configure for the terminal device, where
   optionally, the list of maximum aggregated bandwidth values may include only one value.

If the assistance information used to reduce power consumption or the overheating assistance information that is reported by the terminal device includes a maximum aggregated bandwidth, across a carrier in the FR 2, that the terminal device prefers to be temporarily configured, the S-Node modification request message includes the fourth information, which specifically includes:
(1) a list of maximum aggregated bandwidth values, across all uplink carriers in the FR 2, that the SN can or is allowed to temporarily configure for the UE, where
   optionally, the list of maximum aggregated bandwidth values may include only one value; or
(2) a list of maximum aggregated bandwidth values, across all downlink carriers in the FR 2, that the SN can or is allowed to temporarily configure for the UE, where
   optionally, the list of maximum aggregated bandwidth values may include only one value.

For example, when the terminal device is not overheated, a maximum aggregated bandwidth that is across the uplink carrier in the FR 1, that is configured by a base station, and that can be supported by the terminal device is 200M. When the terminal device encounters the overheating problem, the terminal device reports, to the MN in the overheating assistance information, that a maximum aggregated bandwidth that the terminal device currently prefers to be configured is 100M. The MN may determine, based on 100M reported by the terminal device, that maximum aggregated bandwidths, across the uplink carrier in the FR 1, that can be configured by the SN for the terminal device are 10M, 20M, 40M, and 80M. 10M, 20M, 40M, and 80M may be understood as a list of maximum aggregated bandwidths. The MN notifies the SN of the list of maximum aggregated bandwidths by using the second message. The SN may select 20M from 10M, 20M, 40M, and 80M. In other words, the SN determines that a maximum aggregated bandwidth, across the uplink carrier in the FR 1, that is to be configured for the terminal device is 20M.

When the second message includes the list of maximum aggregated bandwidths, the third message sent by the SN to the MN may include the maximum aggregated bandwidth 20M, across the uplink carrier in the FR 1, that the SN chooses to configure for the terminal device. When the MN receives the aggregated bandwidth 20M configured by the SN for the terminal device, the MN learns that a maximum aggregated bandwidth, across the uplink carrier in the FR 1, that can be configured for the terminal device is 100M - 20M = 80M.

In another possible implementation, the fourth information is further used to indicate that maximum aggregated bandwidth values across an uplink carrier and maximum aggregated bandwidth values across a downlink carrier that are configured by the second network device for the terminal device in different frequency ranges are not restricted.

Alternatively, a first value in the fourth information is used to indicate that the overheating problem of the terminal device is resolved or the terminal device no longer expects to reduce power consumption. A maximum aggregated bandwidth that can be configured by the SN for the terminal device is no longer restricted to a maximum aggregated bandwidth that can be configured by the SN for the terminal device and that is notified by the MN to the SN when the terminal device previously encounters the overheating problem or expects to reduce power consumption.

For example, after the MN receives the first message that is reported by the terminal device and that carries the overheating assistance information or the assistance information used to reduce power consumption, the MN initiates an SN modification process. The MN sends an S-Node modification request message to the SN. If the assistance information used to reduce power consumption or the overheating assistance information that is reported by the terminal device includes a maximum aggregated bandwidth, across a carrier in the FR 1, that the terminal device prefers to be temporarily configured, the S-Node modification request message includes the fourth information. In addition, a value of the fourth information is a value other than the first value. A maximum aggregated bandwidth, across all carriers in the FR 1, that the SN can or is allowed to temporarily configure for the terminal device specifically includes:
(1) a list of maximum aggregated bandwidth values, across all uplink carriers in the FR 1, that the SN can or is allowed to temporarily configure for the terminal device, where
   optionally, the list of maximum aggregated bandwidth values may include only one value; and
   the first value is used to indicate that a maximum aggregated bandwidth value, across the uplink carrier in the FR 1, that can be configured for the terminal device is not restricted; or
   the first value is used to indicate that the overheating problem of the terminal device is resolved, and a maximum aggregated bandwidth, across the uplink carrier in the FR 1, that can be configured by the SN for the terminal device is no longer restricted to a maximum aggregated bandwidth that is across the uplink carrier in the FR 1, that can be configured by the SN for the terminal device, and that is notified by the MN to the SN when the terminal device previously encounters the overheating problem; or
(2) a list of maximum aggregated bandwidths, across all downlink carriers in the FR 1, that the SN can or is allowed to temporarily configure for the terminal device, where
   optionally, the list of maximum aggregated bandwidth values may include only one value; and
   the first value is used to indicate that a maximum aggregated bandwidth value, across the downlink carrier in the FR 1, that can be configured for the terminal device is not restricted; or
   the first value is used to indicate that the overheating problem of the terminal device is resolved or the terminal device no longer expects to reduce power consumption, and a maximum aggregated bandwidth, across the downlink carrier in the FR 1, that can be configured by the SN for the terminal device is no longer restricted to a maximum aggregated bandwidth that is across the downlink carrier in the FR 1, that can be configured by the SN for the terminal device, and that is notified by the MN to the SN when the terminal device previously encounters the overheating problem or expects to reduce power consumption.

If the assistance information used to reduce power consumption or the overheating assistance information that is reported by the terminal device includes a maximum aggregated bandwidth, across a carrier in the FR 2, that the terminal device prefers to be temporarily configured, the S-Node modification request message includes the fourth information. In addition, a value of the fourth information is a value other than the first value. A maximum aggregated bandwidth, across all carriers in the FR 1, that the SN can or is allowed to temporarily configure for the terminal device specifically includes:
(1) a list of maximum aggregated bandwidth values, across all uplink carriers in the FR 2, that the SN can or is allowed to temporarily configure for the terminal device, where
   optionally, the list of maximum aggregated bandwidth values may include only one value; and
   the first value is used to indicate that a maximum aggregated bandwidth value, across the uplink carrier in the FR 2, that can be configured for the terminal device is not restricted; or
   the first value is used to indicate that the overheating problem of the terminal device is resolved or the terminal device no longer expects to reduce power consumption, and a maximum aggregated bandwidth, across the uplink carrier in the FR 2, that can be configured by the SN for the terminal device is no longer restricted to a maximum aggregated bandwidth that is across the uplink carrier in the FR 2, that can be configured by the SN for the terminal device, and that is notified by the MN to the SN when the terminal device previously encounters the overheating problem or expects to reduce power consumption; or
(2) a list of maximum aggregated bandwidth values, across all downlink carriers in the FR 2, that the SN can or is allowed to temporarily configure for the terminal device, where
   optionally, the list of maximum aggregated bandwidth values may include only one value; and
   the first value is used to indicate that a maximum aggregated bandwidth value, across the downlink carrier in the FR 2, that can be configured for the terminal device is not restricted; or
   the first value is used to indicate that the overheating problem of the terminal device is resolved or the terminal device no longer expects to reduce power consumption, and a maximum aggregated bandwidth, across the downlink carrier in the FR 2, that can be configured by the SN for the terminal device is no longer restricted to a maximum aggregated bandwidth that is across the downlink carrier in the FR 2, that can be configured by the SN for the terminal device, and that is notified by the MN to the SN when the terminal device previously encounters the overheating problem or expects to reduce power consumption.

Optionally, the first value described above may also be represented in a form of an information bit value, or indication information of "no restriction" is carried in the fourth information, to indicate that maximum aggregated bandwidth values that can be configured for the terminal device at different frequencies are not restricted. This is not limited in this application.

In another possible implementation, the second message further includes fifth information, and the fifth information is used to indicate a maximum aggregated bandwidth value reported by the terminal device in the first overheating assistance information or the assistance information used to reduce power consumption. The maximum aggregated bandwidth value may be a maximum aggregated bandwidth value, across a carrier, that the terminal device prefers to be configured by the SN, or may be a maximum sum of an aggregated bandwidth, across a carrier, that the terminal device prefers to be configured by the MN and an aggregated bandwidth, across a carrier, that the terminal device prefers to be configured by the SN.

If the overheating assistance information reported by the terminal device includes a maximum aggregated bandwidth across the uplink carrier in the FR 1 and/or a maximum aggregated bandwidth across the downlink carrier in the FR 1 that the terminal device prefers to be temporarily configured, the third information in the S-Node modification request message may further include a maximum aggregated bandwidth value across all uplink carriers in the FR 1 and/or a maximum aggregated bandwidth value across all downlink carriers in the FR 1 that the terminal device prefers to be temporarily configured.

If the assistance information used to reduce power consumption or the overheating assistance information that is reported by the terminal device includes a maximum aggregated bandwidth across the uplink carrier in the FR 2 and/or a maximum aggregated bandwidth across the downlink carrier in the FR 2 that the terminal device prefers to be temporarily configured, the third information in the S-Node modification request message may further include a maximum aggregated bandwidth value across all uplink carriers in the FR 2 and/or a maximum aggregated bandwidth value across all downlink carriers in the FR 2 that the terminal device prefers to be temporarily configured.

For example, when the terminal device encounters the overheating problem, the terminal device reports, to the MN in the overheating assistance information, that a maximum aggregated bandwidth, across the uplink carrier in the FR 1, that the terminal device currently prefers to be configured is 100M. The MN may notify, by using the fifth information in the second message, the SN that the maximum aggregated bandwidth, across the uplink carrier in the FR 1, that the terminal device currently prefers to be configured is 100M. The SN may configure an aggregated bandwidth lower than or equal to 100M for the terminal device, for example, 80M.

Optionally, the second message further includes sixth information, and the sixth information is used to indicate that the terminal device encounters the overheating problem or the terminal device expects to reduce power consumption.

For example, when the terminal device encounters the overheating problem, the MN notifies the SN of the included information indicating that the terminal device encounters the overheating problem, so that the SN can learn that the terminal device currently encounters the overheating problem. Therefore, when the MN sends a configurable maximum aggregated bandwidth to the SN, the SN may directly perform configuration based on the maximum aggregated bandwidth that is sent by the MN, and does not additionally apply for another maximum aggregated bandwidth. This avoids redundant information exchange between the MN and the SN, and can resolve the existing overheating problem of the terminal device.

Optionally, the second message further includes seventh information, and the seventh information is used to indicate that the overheating problem of the terminal device is resolved or the terminal device no longer expects to reduce power consumption.

Likewise, after the overheating problem of the terminal device is resolved, the MN notifies the SN of the included information indicating that the overheating problem of the terminal device is resolved, so that the SN can learn that the current overheating problem of the terminal device is resolved. Therefore, the SN may perform configuration based on a maximum aggregated bandwidth that is sent by the MN, or apply for another maximum aggregated bandwidth to configure an aggregated bandwidth for the terminal device, or configure an aggregated bandwidth for the terminal device based on a maximum capability supported by the terminal device when the terminal device is not overheated.

When the second message includes the fourth information, and the fourth information indicates that a quantity of values in a list of maximum aggregated bandwidths, across the uplink carrier in the FR 1, that the SN can or is allowed to configure for the terminal device is greater than 1, the third message sent by the SN to the MN may include a maximum aggregated bandwidth that is across the uplink carrier in the FR 1, that is selected by the SN from the list, and that is configured for the terminal device.

When the second message includes the fourth information, and the fourth information indicates that a quantity of values in a list of maximum aggregated bandwidths, across the downlink carrier in the FR 1, that the SN can or is allowed to configure for the terminal device is greater than 1, the third message sent by the SN to the MN may include a maximum aggregated bandwidth that is across the downlink carrier in the FR 1, that is selected by the SN from the list, and that is configured for the terminal device.

When the second message includes the fourth information, and the fourth information indicates that a quantity of values in a list of maximum aggregated bandwidths, across the uplink carrier in the FR 2, that the SN can or is allowed to configure for the terminal device is greater than 1, the third message sent by the SN to the MN may include a maximum aggregated bandwidth that is across the uplink carrier in the FR 2, that is selected by the SN from the list, and that is configured for the terminal device.

When the second message includes the fourth information, and the fourth information indicates that a quantity of values in a list of maximum aggregated bandwidths, across the downlink carrier in the FR 2, that the SN can or is allowed to configure for the terminal device is greater than 1, the third message sent by the SN to the MN may include a maximum aggregated bandwidth that is across the downlink carrier in the FR 2, that is selected by the SN from the list, and that is configured for the terminal device.

When the second message includes the fourth information and the fifth information, and the fourth information indicates that a quantity of values in a list of maximum aggregated bandwidths, across the uplink carrier in the FR 1, that the SN can or is allowed to configure for the terminal device is greater than 1, the third message sent by the SN to the MN may include a maximum aggregated bandwidth that is across the downlink carrier in the FR 1, that is selected by the SN from the list, and that is configured for the terminal device, and the third message sent by the SN to the MN may further include a maximum aggregated bandwidth that is across the uplink carrier in the FR 1, that is determined by the SN based on the fifth information, and that the SN requests the MN to configure for the terminal device. The requested maximum aggregated bandwidth across the uplink carrier in the FR 1 is not included in the foregoing list.

When the second message includes the fourth information and the fifth information, and the fourth information indicates that a quantity of values in a list of maximum aggregated bandwidths, across the downlink carrier in the FR 1, that the SN can or is allowed to configure for the terminal device is greater than 1, the third message sent by the SN to the MN may include a maximum aggregated bandwidth that is across the downlink carrier in the FR 1, that is selected by the SN from the list, and that is configured for the terminal device, and the third message sent by the SN to the MN may further include a maximum aggregated bandwidth that is across the downlink carrier in the FR 1, that is determined by the SN based on the fifth information, and that the SN requests the MN to configure for the terminal device. The requested maximum aggregated bandwidth across the downlink carrier in the FR 1 is not included in the foregoing list.

When the second message includes the fourth information and the fifth information, and the fourth information indicates that a quantity of values in a list of maximum aggregated bandwidths, across the uplink carrier in the FR 2, that the SN can or is allowed to configure for the terminal device is greater than 1, the third message sent by the SN to the MN may include a maximum aggregated bandwidth that is across the downlink carrier in the FR 2, that is selected by the SN from the list, and that is configured for the terminal device, and the third message sent by the SN to the MN may further include a maximum aggregated bandwidth that is across the uplink carrier in the FR 2, that is determined by the SN based on the fifth information, and that the SN requests the MN to configure for the terminal device. The requested maximum aggregated bandwidth across the uplink carrier in the FR 2 is not included in the foregoing list.

When the second message includes the fourth information and the fifth information, and the fourth information indicates that a quantity of values in a list of maximum aggregated bandwidths, across the downlink carrier in the FR 2, that the SN can or is allowed to configure for the terminal device is greater than 1, the third message sent by the SN to the MN may include a maximum aggregated bandwidth that is across the downlink carrier in the FR 2, that is selected by the SN from the list, and that is configured for the terminal device, and the third message sent by the SN to the MN may further include a maximum aggregated bandwidth that is across the downlink carrier in the FR 2, that is determined by the SN based on the fifth information, and that the SN requests the MN to configure for the terminal device. The requested maximum aggregated bandwidth across the downlink carrier in the FR 2 is not included in the foregoing list.

For different types of communications parameters, the foregoing describes, by using different cases, types of information that may be included in the second message and types of information in the third message.

It should be understood that, in all of the plurality of MR-DC scenarios listed in FIG. 2(a) to FIG. 2(d), the overheating assistance information reported by the terminal device to the MN may include at least one of the maximum quantity of Scells, the maximum quantity of MIMO layers, and the maximum aggregated bandwidth. Therefore, in the MR-DC scenario, the second message (secondary node modification request message) sent by the MN to the SN may include at least one of the maximum quantity of uplink secondary cells, the maximum quantity of downlink secondary cells, the maximum quantity of uplink MIMO layers, the maximum quantity of downlink MIMO layers, the maximum uplink aggregated bandwidth, and the maximum downlink aggregated bandwidth.

In another possible implementation, when the terminal device encounters the overheating problem or the terminal device expects to reduce power consumption, the second message further includes second overheating assistance information or assistance information used to reduce power consumption. The second overheating assistance information or the assistance information used to reduce power consumption includes at least one of the first information, the second information, the third information, the fourth information, and the fifth information. When the overheating problem of the terminal device is resolved or the terminal device no longer expects to reduce power consumption, the second overheating assistance information or the assistance information used to reduce power consumption includes no information.

It should be understood that the second overheating assistance information herein is different from the foregoing first assistance information.

In addition, when the overheating problem of the terminal device is resolved or the terminal device no longer expects to reduce power consumption, the second overheating assistance information or the assistance information used to reduce power consumption may include no information content, or may include only the seventh information, used to notify the SN that the overheating problem of the terminal device is resolved or the terminal device no longer expects to reduce power consumption.

The foregoing enumerated information of various types may be carried in different information elements in the second message (secondary node modification request message).

In a possible implementation, the first information, the second information, the third information, the fourth information, the fifth information, and the second overheating assistance information or the assistance information used to reduce power consumption may be included in an information element ConfigRestrctInfoSCG.

In another possible implementation, the first information, the second information, the third information, the fourth information, the fifth information, and the second overheating assistance information or the assistance information used to reduce power consumption may be included in an information element MRDC-assistanceInfo. In a possible implementation, the sixth information and the seventh information may be included in any one of the following information elements in the following several manners:
1. The sixth information and the seventh information are included in ConfigRestrctInfoSCG or MRDC-assistanceInfo.
   Optionally, when the second message includes the band combination list, the sixth information is used by the MN to notify the SN that a cause for sending the band combination list is that the terminal device encounters the overheating problem or the terminal device expects to reduce power consumption, or the sixth information is used by the MN to notify the SN that a cause for sending ConfigRestrictInfoSCG is that the terminal device encounters the overheating problem or the terminal device expects to reduce power consumption.
2. The sixth information and the seventh information are included in CG-ConfigInfo.
3. The sixth information and the seventh information are directly included in the S-Node modification request message.

Specifically, two values are added to a cause included in the existing S-Node modification request message, to separately indicate that a cause for sending the S-Node modification request message by the MN or initiating the SN modification process by the MN is that the terminal device encounters the overheating problem or the overheating problem of the terminal device is resolved, or indicate that a cause for sending the S-Node modification request message by the MN or initiating the SN modification process by the MN is that the terminal device expects to reduce power consumption or no longer expects to reduce power consumption.

According to the foregoing technical solutions, in a dual connectivity network architecture, for a master node device (the MN) and a secondary node device (the SN), when the terminal device encounters the overheating problem or the terminal device expects to reduce power consumption, the MN may notify the SN that the terminal device encounters the overheating problem or the terminal device expects to reduce power consumption, or provide, for the SN, the assistance information that is determined by the MN and that is used to resolve the overheating problem of the terminal device or reduce the power consumption of the terminal device. The assistance information may include a communications parameter that the MN indicates that the SN can or is allowed to configure for the terminal device, or the assistance information may include the communications parameter that is reported by the terminal device and that is used to resolve the overheating problem or reduce the power consumption. In this way, the SN may select, from the assistance information provided by the MN, the communications parameter used to resolve the overheating problem of the terminal device or reduce the power consumption of the terminal device, so as to configure the communications parameter for the terminal device. When the terminal device works in the MR-DC scenario, and the terminal device encounters the overheating problem or the terminal device expects to reduce power consumption, the SN can configure a proper maximum quantity of MIMO layers, a proper maximum quantity of SCells, or a proper maximum aggregated bandwidth for the terminal device, to help the terminal device alleviate the overheating problem or help the terminal device reduce the power consumption. When the overheating problem of the terminal device is resolved or the terminal device no longer expects to reduce power consumption, the MN may further notify the SN that the overheating problem of the terminal device is resolved or the terminal device no longer expects to reduce power consumption, and may restore a configuration of a maximum capability supported by the terminal device or a configuration used when the terminal device is originally connected to the MN and the SN.

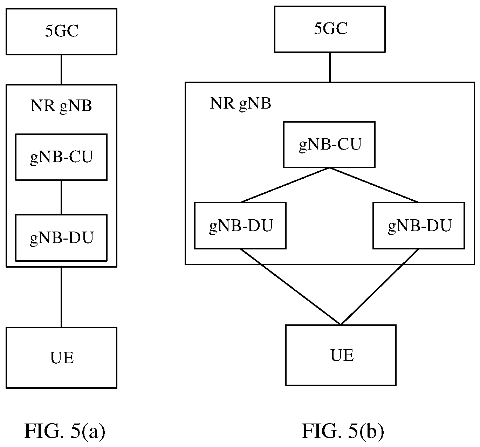

The foregoing describes the information transmission method in this application for an access network architecture including an MN and an SN. In 5G, a new access network architecture is introduced, and a 5G gNB (NR gNB) is divided into a central unit (central unit, CU) and a distributed unit (distributed unit, DU). A control plane protocol layer (radio resource control, RRC) of an access network is located in the central unit. In user plane protocol layers of the access network, a packet data convergence protocol (packet data convergence protocol, PDCP) layer is located in the central unit, and other protocol layers including a radio link control (radio link control, RLC) layer, a media access control (media access control, MAC) layer, and a physical layer (physical layer, Phy) are located in the distributed unit. A network architecture thereof is shown in FIG. 5(a).

For a CU-DU architecture shown in FIG. 5(b), in a communication process between a terminal device and a master node device (a master base station), a communications parameter required by the terminal device may be configured by the CU and scheduled by the DU, or may be configured by the DU.

After the terminal device encounters an overheating problem in an access network of the CU-DU architecture, the terminal device may report, to the master base station, an overheating message carrying overheating assistance information element. In other words, the terminal device may report, to the CU, the overheating message carrying the overheating assistance information element. After the CU receives a maximum quantity of MIMO layers that is reported by the terminal device and that the terminal device supports to temporarily configure, there are the following two possible cases:
(1) If the CU configures a maximum quantity of MIMO layers in each serving cell for the terminal device, the CU reconfigures the maximum quantity of MIMO layers, and the DU also needs to learn of the maximum quantity of MIMO layers. Otherwise, a problem occurs when the DU schedules data transmission for the terminal device.
(2) If the DU configures, for the terminal device, a maximum quantity of MIMO layers that is used in each serving cell, to resolve the overheating problem of the terminal device, the DU needs to learn of the maximum quantity of MIMO layers that the terminal device supports to temporarily configure.

In conclusion, in either of the foregoing cases, the overheating information reported by the terminal device is an RRC message. Therefore, because the DU has no corresponding RRC layer, the DU cannot obtain information content included in the overheating message, and consequently, the DU cannot obtain corresponding information. As a result, the DU cannot perform configuration for the terminal device based on the maximum quantity of MIMO layers that is preferred by the terminal device, and the overheating problem of the terminal device cannot be resolved.

To resolve the overheating problem of the terminal device, this application further provides an information transmission method. Through information exchange between a CU and a DU of a network device, the DU can learn that the terminal device encounters the overheating problem, and then configure a proper maximum quantity of MIMO layers for the terminal device, or uplink and/or downlink data transmission can be scheduled for the terminal device based on a maximum quantity of MIMO layers that is supported by the terminal device.

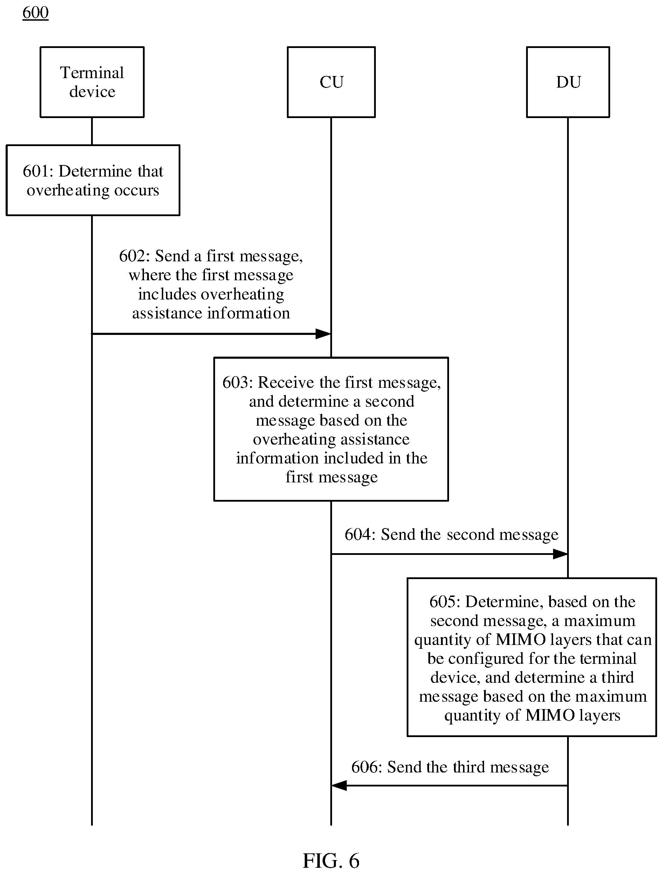

FIG. 6 is a schematic interaction diagram of an information transmission method 600 according to an embodiment of this application. Each step of the method 600 is described in detail below.

It should be understood that in this embodiment of this application, the method 600 is described by using an example in which the method 600 is performed by a terminal device, a CU, and a DU. By way of example but not limitation, the method 600 may be performed by a chip used in the terminal device and chips used in the CU and the DU.

S601: The terminal device determines that overheating occurs.

S602: The terminal device sends a first message to the CU, where the first message includes overheating assistance information, and the overheating assistance information is used to indicate whether the terminal device is overheated.

Optionally, the first message is an overheating message (UE assistance information carrying the overheating assistance information) sent by the terminal device to the CU. When the overheating message includes the overheating assistance information, the overheating assistance information may include a maximum quantity of MIMO layers that the terminal device prefers to be temporarily configured, and the maximum quantity of MIMO layers is a parameter configuration that can be used to resolve an overheating problem of the terminal device.

It should be understood that, when establishing a connection to a base station, the terminal device reports a maximum capability of the terminal device in a normal state to the base station. A communications parameter reported by the terminal device in an overheating case is less than a communications parameter corresponding to the maximum capability of the terminal device in the normal state.

For example, a supported maximum quantity of MIMO layers that is reported by the terminal device in the normal state is 4. In other words, a maximum quantity of MIMO layers that is configured by the CU for the terminal device is 4. When the terminal device is overheated, the overheating assistance information sent by the terminal device to the CU indicates that a maximum quantity of MIMO layers that the terminal device currently prefers to be temporarily configured is 2. In this case, after the CU reconfigures the maximum quantity 2 of MIMO layers for the terminal device, the DU also needs to learn of the maximum quantity of MIMO layers, to resolve the overheating problem of the terminal device.

S603: The CU receives the first message sent by the terminal device, and determines a second message based on the overheating assistance information included in the first message.

It should be understood that the second message is used to indicate the DU to adjust a communications parameter configured for the terminal device, and the communications parameter includes a quantity of uplink MIMO layers and/or a quantity of downlink MIMO layers.

S604: The CU sends the second message to the DU. Correspondingly, the DU receives the second message sent by the CU.

S605: The DU determines, based on the second message sent by the CU, a maximum quantity of MIMO layers that can be configured or scheduled for the terminal device, and determines a third message based on the maximum quantity of MIMO layers.

S606: The SN sends the third message to the MN. Correspondingly, the CU receives the third message sent by the DU, and the third message is a response message for the second message.

It should be understood that, in S602, it is described that when the terminal device is overheated, the terminal device uses the overheating assistance information to carry the currently supported communications parameter. When the overheating problem of the terminal device is resolved, the overheating assistance information includes no information. Therefore, the CU may determine, based on whether the overheating assistance information carries information, whether the terminal device is overheated currently.

In a possible implementation, the first message is a terminal device context modification request (UE context modification request) message, and the second message is a terminal device context modification response (UE context modification response) message.

In a possible implementation, the second message includes the overheating assistance information, the overheating assistance information includes first information, and the first information is used to indicate maximum quantities of uplink MIMO layers and/or maximum quantities of downlink MIMO layers, of serving cells in different frequency ranges, that the terminal device prefers to be configured. For example, when the terminal device is not overheated, a maximum quantity of MIMO layers that is configured by the DU and that can be supported by the terminal device is 8. When the terminal device encounters the overheating problem, the terminal device reports, to the CU in the overheating assistance information, that a quantity of MIMO layers, of a serving cell in an FR 1, that the terminal device currently prefers to be configured is 4. After the CU receives the terminal device overheating message reported by the terminal device, the CU initiates a terminal device context modification process. The CU sends a UE context modification request message to the DU.

If the overheating assistance information reported by the terminal device includes a maximum quantity of MIMO layers, of the serving cell in the FR 1, that the terminal device prefers to be temporarily configured, and the CU determines to reconfigure, for the terminal device, a maximum quantity of uplink MIMO layers and/or a maximum quantity of downlink MIMO layers that are/is used by the terminal device in the serving cell in the FR 1, the CU uses the UE context modification request message to carry a maximum quantity of uplink MIMO layers and/or a maximum quantity of downlink MIMO layers that are/is configured for the terminal device and that are/is used in each serving cell in the FR 1.

If the overheating assistance information reported by the terminal device includes a maximum quantity of MIMO layers, of a serving cell in an FR 2, that the terminal device prefers to be temporarily configured, and the CU determines to reconfigure, for the terminal device, a maximum quantity of uplink MIMO layers and/or a maximum quantity of downlink MIMO layers that are/is used by the terminal device in the serving cell in the FR 2, the CU uses the UE context modification request message to carry a maximum quantity of uplink MIMO layers and/or a maximum quantity of downlink MIMO layers that are/is configured for the terminal device and that are/is used in each serving cell in the FR 2.

If the overheating assistance information reported by the terminal device includes no information, and the CU determines to reconfigure, for the terminal device, a maximum quantity of uplink MIMO layers and/or a maximum quantity of downlink MIMO layers that are/is used by the terminal device in the serving cell in the FR 1, the CU uses the UE context modification request message to carry a maximum quantity of uplink MIMO layers and/or a maximum quantity of downlink MIMO layers that are/is configured for the terminal device and that are/is used in each serving cell in the FR 1.

If the overheating assistance information reported by the terminal device includes no information, and the CU determines to reconfigure, for the terminal device, a maximum quantity of uplink MIMO layers and/or a maximum quantity of downlink MIMO layers that are/is used by the terminal device in a serving cell in an FR 2, the CU uses the UE context modification request message to carry a maximum quantity of uplink MIMO layers and/or a maximum quantity of downlink MIMO layers that are/is configured for the terminal device and that are/is used in each serving cell in the FR 2.

Optionally, the foregoing information may be included in an RRC information element (RRC information) sent by the CU to the DU. A cause or a trigger condition that the CU needs to reconfigure, for the terminal device, the maximum quantity of uplink MIMO layers and/or the maximum quantity of downlink MIMO layers that are/is used in each serving cell may include the following:
(1) The CU receives the overheating message that is reported by the UE and that carries the overheating assistance information.
(2) In an EN-DC configuration, the CU receives assistance information that is sent by an MN and that indicates that the terminal device is overheated.

It should be understood that the foregoing described terminal device overheating assistance information may be carried in a newly added information element in the context modification request message. This is not limited in this application.

It should be further understood that, in this case, a maximum quantity of MIMO layers that is sent by the CU to the DU is a maximum quantity of MIMO layers that is reported by the terminal device. Therefore, the second message may include the quantity of MIMO layers that is reported by the terminal device and that the terminal device prefers to be configured, and a maximum quantity of MIMO layers that is configured by the CU for the terminal device is equal to a maximum quantity of MIMO layers that is configured by the DU for the terminal device. In this case, the third message may include the maximum quantity of MIMO layers, or may not include the maximum quantity of MIMO layers. This is not limited in this application.

In a possible implementation, the second message includes the overheating assistance information, and the overheating assistance information includes no information. In a possible implementation, the second message includes second information, and the second information is used to indicate maximum quantities of uplink MIMO layers and/or maximum quantities of downlink MIMO layers, of serving cells in different frequency ranges, that are configured by the distributed unit for the terminal device.

After the CU receives the overheating message reported by the terminal device, the CU initiates a terminal device context modification process. The CU sends a UE context modification request message to the DU.

If the overheating assistance information reported by the terminal device includes a maximum quantity of MIMO layers, of the serving cell in the FR 1, that the terminal device prefers to be temporarily configured, the UE context modification request message includes the following information:
(1) a maximum quantity of uplink MIMO layers, of the serving cell in the FR 1, that the terminal device prefers to be temporarily configured, where a first value is used to indicate that a maximum quantity of uplink MIMO layers, of the serving cell in the FR 1, that can be configured for the terminal device is not restricted, that is, is the same as a maximum quantity of uplink MIMO layers that is reported by the terminal device in a terminal device capability report message and that can be supported by the terminal device; and/or
(2) a maximum quantity of downlink MIMO layers, of the serving cell in the FR 1, that the terminal device prefers to be temporarily configured, where a first value is used to indicate that a maximum quantity of downlink MIMO layers, of the serving cell in the FR 1, that can be configured for the terminal device is not restricted, that is, is the same as a maximum quantity of uplink MIMO layers that is reported by the terminal device in a terminal device capability report message and that can be supported by the terminal device.

Optionally, a value of the foregoing enumerated second information is a corresponding value reported by the terminal device in the overheating assistance information.

If the overheating assistance information reported by the terminal device includes a maximum quantity of MIMO layers, of the serving cell in the FR 2, that the terminal device prefers to be temporarily configured, the UE context modification request message includes the following information:
(1) a maximum quantity of uplink MIMO layers, of the serving cell in the FR 2, that the terminal device prefers to be temporarily configured, where a first value is used to indicate that a maximum quantity of uplink MIMO layers, of the serving cell in the FR 2, that can be configured for the terminal device is not restricted, that is, is the same as a maximum quantity of uplink MIMO layers that is reported by the terminal device in a terminal device capability report message and that can be supported by the terminal device; and/or
(2) a maximum quantity of downlink MIMO layers, of the serving cell in the FR 2, that the terminal device prefers to be temporarily configured, where a first value is used to indicate that a maximum quantity of downlink MIMO layers, of the serving cell in the FR 2, that can be configured for the terminal device is not restricted, that is, is the same as a maximum quantity of uplink MIMO layers that is reported by the terminal device in a terminal device capability report message and that can be supported by the terminal device.

Optionally, a value of the foregoing enumerated second information is a corresponding value reported by the terminal device in the overheating assistance information.

If the overheating assistance information reported by the terminal device includes no information, the UE context modification request message includes the first value in one or more items in the foregoing enumerated second information.

In a possible implementation, the second message includes second information, and the second information is UE assistance information that is reported by the terminal device and that carries the overheating assistance information.

After the CU receives the overheating message reported by the terminal device, the CU initiates a terminal device context modification process. The CU sends a UE context modification request message to the DU. The UE context modification request message includes the UE assistance information carrying the overheating assistance information.

After receiving the UE context modification request message sent by the CU, the DU returns a UE context modification response message to the CU. The UE context modification response message includes the following optional information:
(1) a maximum quantity of uplink MIMO layers that is configured by the DU for the terminal device in each serving cell; and/or
(2) a maximum quantity of downlink MIMO layers that is configured by the DU for the terminal device in each serving cell.

According to the foregoing technical solutions, when the terminal device encounters the overheating problem in a CU-DU network, after the CU receives the overheating message reported by the terminal device, the CU may reconfigure a maximum quantity of MIMO layers for the terminal device. In addition, the DU can learn of the maximum quantity of MIMO layers that is currently configured by the CU for the terminal device. This ensures that during data transmission scheduled for the terminal device, a maximum quantity of MIMO layers that is configured for the terminal device does not exceed the maximum quantity of MIMO layers that is configured by the CU for the terminal device, thereby resolving the overheating problem of the terminal device.

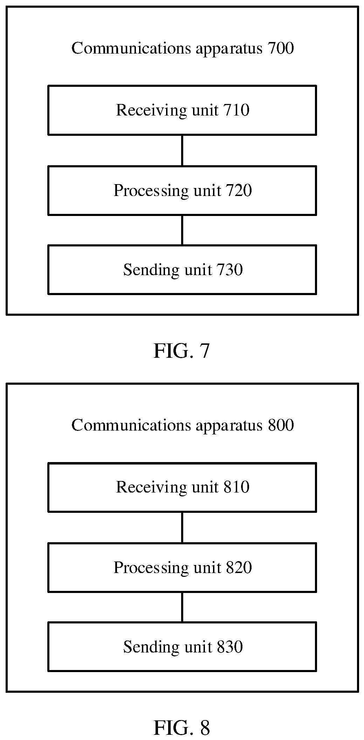

The foregoing describes in detail the feedback information transmission method in the embodiments of this application with reference to FIG. 2(a) to FIG. 2(d) to FIG. 6. The following describes in detail a feedback information transmission apparatus in the embodiments of this application with reference to FIG. 7 to FIG. 10.

FIG. 7 is a schematic block diagram of a communications apparatus 700 according to an embodiment of this application. The apparatus 700 may correspond to the master base station described in the method 400, or may be a chip or a component used in the master base station. In addition, modules or units in the apparatus 700 are separately configured to perform actions or processing processes performed by the master base station in the method 400. As shown in FIG. 7, the communications apparatus 700 may include a receiving unit 710, a processing unit 720, and a sending unit 730.

The receiving unit 710 is configured to receive a first message sent by a terminal device, where the first message includes first overheating assistance information, and the first overheating assistance information is used to indicate whether the terminal device is overheated.

The processing unit 720 is configured to determine a second message based on the first overheating assistance information, where the second message is used to indicate a second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth.

The sending unit 730 is configured to send the second message to the second network device.

In some possible implementations, the receiving unit 710 is further configured to receive a third message sent by the second network device, where the third message is a response message for the second message, and the third message is used to indicate a communications parameter configured by the second network device for the terminal device.

Specifically, the receiving unit 710 is configured to perform S402 in the method 400, the processing unit 720 is configured to perform S403 in the method 400, and the sending unit 730 is configured to perform S404 in the method 400. A specific process in which the units perform the foregoing corresponding steps is described in detail in the method 400. For brevity, details are not described herein.

FIG. 8 is a schematic block diagram of a communications apparatus 800 according to an embodiment of this application. The apparatus 800 may correspond to the secondary base station described in the method 400, or may be a chip or a component used in the secondary base station. In addition, modules or units in the apparatus 800 are separately configured to perform actions or processing processes performed by the master base station in the method 400. As shown in FIG. 8, the communications apparatus 800 may include a receiving unit 810, a processing unit 820, and a sending unit 830.

The receiving unit 810 is configured to receive a second message sent by a first network device, where the second message is used to indicate the second network device to adjust a communications parameter configured for the terminal device, and the communications parameter includes at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth.

The processing unit 820 is configured to configure the communications parameter for the terminal device based on the second message.

Optionally, the processing unit 820 is further configured to determine a third message based on the communications parameter.

The sending unit 830 is configured to send the third message to the first network device, where the third message is a response message for the second message, and the third message is used to indicate the communications parameter configured by the second network device for the terminal device.

Specifically, the receiving unit 810 is configured to perform S404 in the method 400, the processing unit 820 is configured to perform S405 in the method 400, and the sending unit 830 is configured to perform S406 in the method 400. A specific process in which the units perform the foregoing corresponding steps is described in detail in the method 400. For brevity, details are not described herein.

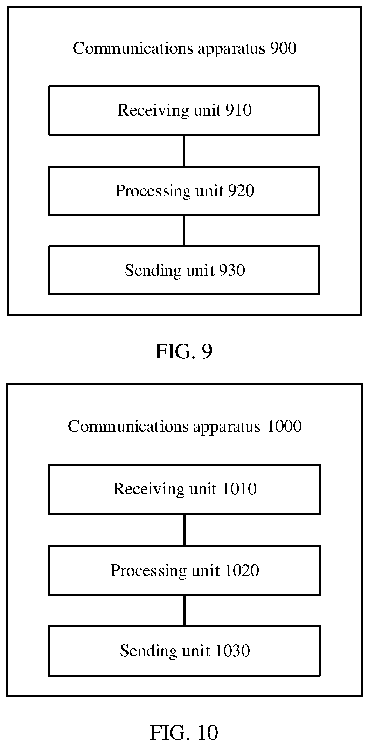

FIG. 9 is a schematic block diagram of a communications apparatus 900 according to an embodiment of this application. The apparatus 900 may correspond to the central unit CU described in the method 600, or may be a chip or a component used in the CU. In addition, modules or units in the apparatus 900 are separately configured to perform actions or processing processes performed by the CU in the method 600. As shown in FIG. 9, the communications apparatus 900 may include a receiving unit 910, a processing unit 920, and a sending unit 930.

The receiving unit 910 is configured to receive a first message sent by a terminal device, where the first message includes overheating assistance information, and the overheating assistance information is used to indicate whether the terminal device is overheated.

The processing unit 920 is configured to determine a second message based on the overheating assistance information, where the second message is used to indicate the distributed unit to adjust a communications parameter configured for the terminal device, and the communications parameter includes a quantity of uplink multiple-input multiple-output layers MIMO layers and/or a quantity of downlink MIMO layers.

The sending unit 930 is configured to send the second message to the distributed unit.

Specifically, the receiving unit 910 is configured to perform S602 in the method 600, the processing unit 920 is configured to perform S603 in the method 600, and the sending unit 930 is configured to perform S604 in the method 600. A specific process in which the units perform the foregoing corresponding steps is described in detail in the method 600. For brevity, details are not described herein.

FIG. 10 is a schematic block diagram of a communications apparatus 1000 according to an embodiment of this application. The apparatus 1000 may correspond to the central unit CU described in the method 600, or may be a chip or a component used in the CU. In addition, modules or units in the apparatus 1000 are separately configured to perform actions or processing processes performed by the CU in the method 600. As shown in FIG. 10, the communications apparatus 1000 may include a receiving unit 1010, a processing unit 1020, and a sending unit 1030.

The receiving unit 1010 is configured to receive a second message sent by a central unit, where the second message is used to indicate the distributed unit to adjust a communications parameter configured for the terminal device, and the communications parameter includes a quantity of uplink multiple-input multiple-output layers MIMO layers and/or a quantity of downlink MIMO layers.

The processing unit 1020 is configured to configure a maximum quantity of MIMO layers for the terminal device based on the second message sent by the central unit.

Optionally, the processing unit 1020 is further configured to determine a third message based on the maximum quantity of MIMO layers, where the third message is a response message for the second message.

The apparatus 1000 further includes the sending unit 1030, configured to send the third message to the central unit.

Specifically, the receiving unit 1010 is configured to perform S604 in the method 600, the processing unit 1020 is configured to perform S605 in the method 600, and the sending unit 1030 is configured to perform S606 in the method 600. A specific process in which the units perform the foregoing corresponding steps is described in detail in the method 600. For brevity, details are not described herein.

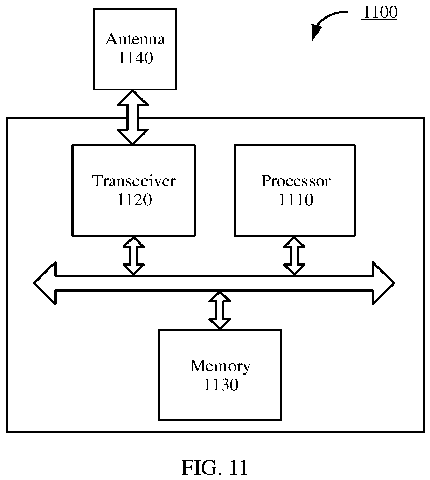

FIG. 11 is a schematic structural diagram of a network device 1100 according to an embodiment of this application. As shown in FIG. 11, the network device 1100 (for example, a base station, a CU, or a DU) includes a processor 1110 and a transceiver 1120. Optionally, the network device 1100 further includes a memory 1130. The processor 1110, the transceiver 1120, and the memory 1130 communicate with each other through an internal connection path, to transfer a control signal and/or a data signal. The memory 1130 is configured to store a computer program. The processor 1110 is configured to invoke the computer program from the memory 1130 and run the computer program, to control the transceiver 1120 to send or receive a signal.

The processor 1110 and the memory 1130 may be integrated into one processing apparatus. The processor 1110 is configured to execute program code stored in the memory 1130, to implement functions of the base station, the CU, or the DU in the foregoing method embodiments. During specific implementation, the memory 1130 may be integrated into the processor 1110, or may be independent of the processor 1110. The transceiver 1120 may be implemented by using a transceiver circuit.

The network device may further include an antenna 1140, configured to: send, through a radio signal, downlink data or downlink control signaling that is output by the transceiver 1120, or receive uplink data or uplink control signaling and then send the uplink data or the uplink control signaling to the transceiver 820 for further processing.

It should be understood that the apparatus 1100 may correspond to the master base station or the secondary base station in the method 400 according to the embodiments of this application, or the apparatus 1100 may be a chip or a component used in the base station. Alternatively, the apparatus 1100 may correspond to the CU or the DU in the method 600 according to the embodiments of this application, or the apparatus 1100 may be a chip or a component used in the CU or the DU. In addition, each module in the apparatus 1100 implements a corresponding procedure in the method 400 in FIG. 4 or the method 600 in FIG. 6. Specifically, the memory 1130 is configured to store program code, so that when the processor 1110 executes the program code, the processor 1110 is controlled to perform S403 and S405 in the method 400 and perform S603 and S605 in the method 600. The transceiver 1120 is configured to perform S402, S404, and S406 in the method 400, and perform S602, S604, and S606 in the method 600. A specific process in which the units perform the foregoing corresponding steps is described in detail in the methods 400 and 600. For brevity, details are not described herein.

It should be understood that the quantity of MIMO layers in this application may alternatively be a quantity of antenna ports. Therefore, the quantity of MIMO layers that is reported by the terminal device to the MN or the SN and the quantity of MIMO layers that is notified by the MN to the SN may alternatively be quantities of antenna ports.

It should be understood that division into manners, cases, types, and embodiments in the embodiments of this application is merely for ease of description, but should not be construed as a special limitation, and features in various manners, types, cases, and embodiments may be combined when there is no contradiction.

It should be further understood that "first", "second", and "third" in the embodiments of this application are merely used for differentiation, and should not be construed as any limitation on this application. For example, the "first overheating assistance information" and the "second overheating assistance information" in the embodiments of this application indicate overheating assistance information including different information content.

It should be further understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

It should be further noted that the term "and/or" describes an association relationship between associated objects and represents that three relationships may exist. For example, A and/or B may represent the following three cases: Only A exists, both A and B exist, and only B exists. The character "/" usually indicates an "or" relationship between the associated objects. The technical solutions provided in this application are described in detail below with reference to the accompanying drawings.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the foregoing described apparatus embodiments are merely examples. Division into the units is merely logical function division. There may be another division manner in actual implementation. For example, a plurality of units or components may be combined. In addition, the displayed or discussed mutual coupling or communication connection may be an indirect coupling or communication connection through some interfaces, apparatuses, or units.

In addition, function units in the embodiments of this application may be integrated into one physical entity, or each of the units may correspond to one physical entity, or two or more units may be integrated into one physical entity.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

## Claims

1. An information transmission method, comprising:
receiving, by a first network device, a first message sent by a terminal device, wherein the first message comprises first overheating assistance information, and the first overheating assistance information is used to indicate whether the terminal device is overheated;
determining, by the first network device, a second message based on the first overheating assistance information, wherein the second message is used to indicate a second network device to adjust a communications parameter configured for the terminal device, and the communications parameter comprises at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and
sending, by the first network device, the second message to the second network device.

2. The method according to claim 1, wherein the communications parameter specifically comprises:
at least one of the following parameters that the terminal device prefers to be temporarily configured: a maximum quantity of uplink secondary cells, a maximum quantity of downlink secondary cells, a maximum quantity of uplink MIMO layers of a serving cell in a first frequency range, a maximum quantity of downlink MIMO layers of the serving cell in the first frequency range, a maximum quantity of uplink MIMO layers of a serving cell in a second frequency range, a maximum quantity of downlink MIMO layers of the serving cell in the second frequency range, a maximum uplink aggregated bandwidth across an uplink carrier in the first frequency range, a maximum downlink aggregated bandwidth across a downlink carrier in the first frequency range, a maximum uplink aggregated bandwidth across an uplink carrier in the second frequency range, and a maximum downlink aggregated bandwidth across a downlink carrier in the second frequency range.

3. The method according to claim 2, wherein
a maximum quantity of MIMO layers in the assistance information is a maximum quantity of MIMO layers, of a serving cell of an SCG, that the terminal device prefers to be configured by an SN; or
a maximum quantity of MIMO layers in the assistance information is a maximum quantity of MIMO layers, of a serving cell of an MCG, that the terminal device prefers to be configured by an MN; or
a maximum quantity of MIMO layers in the assistance information is a maximum quantity of MIMO layers, of a serving cell of an MCG, that the terminal device prefers to be configured by an MN, and is a maximum quantity of MIMO layers, of a serving cell of an SCG, that the terminal device prefers to be configured by an SN; or
maximum quantities of MIMO layers in the assistance information comprise a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN; and
the maximum quantity of MIMO layers in the assistance information comprises at least one of the maximum quantity of uplink MIMO layers of the serving cell in the first frequency range, the maximum quantity of downlink MIMO layers of the serving cell in the first frequency range, the maximum quantity of uplink MIMO layers of the serving cell in the second frequency range, and the maximum quantity of downlink MIMO layers of the serving cell in the second frequency range.

4. The method according to claim 2, wherein
a maximum aggregated bandwidth in the assistance information is a maximum aggregated bandwidth value, across a carrier, that the terminal device prefers to be configured by an SN; or
a maximum aggregated bandwidth in the assistance information is a maximum sum of an aggregated bandwidth, across a carrier, that the terminal device prefers to be configured by an MN and an aggregated bandwidth, across a carrier, that the terminal device prefers to be configured by an SN; and
the maximum aggregated bandwidth in the assistance information comprises at least one of the maximum uplink aggregated bandwidth across the uplink carrier in the first frequency range, the maximum downlink aggregated bandwidth across the downlink carrier in the first frequency range, the maximum uplink aggregated bandwidth across the uplink carrier in the second frequency range, and the maximum downlink aggregated bandwidth across the downlink carrier in the second frequency range.

5. The method according to any one of claims 1 to 4, wherein
the second message may be further used to request the second network device to configure a communications parameter for the terminal device.

6. The method according to any one of claims 1 to 5, wherein
the first message is a message that is sent by the terminal device to a master node device and that carries the overheating assistance information.

7. The method according to any one of claims 1 to 6, wherein the method further comprises:
receiving, by the first network device, a third message sent by the second network device, wherein the third message is a response message for the second message, and the third message is used to indicate a communications parameter configured by the second network device for the terminal device.

8. The method according to any one of claims 1 to 7, wherein the second message further comprises a band combination list, and the band combination list comprises at least one band combination configured by the second network device for the terminal device.

9. The method according to any one of claims 1 to 8, wherein the second message further comprises first information, and the first information is used to indicate a maximum quantity of uplink secondary cells and/or a maximum quantity of downlink secondary cells that are/is configured by the second network device for the terminal device.

10. The method according to any one of claims 1 to 9, wherein the second message further comprises second information, and the second information is used to indicate a maximum quantity of secondary cells that is reported by the terminal device in the first overheating assistance information.

11. The method according to any one of claims 1 to 10, wherein the second message further comprises third information, and the third information is used to indicate maximum quantities of uplink MIMO layers and/or maximum quantities of downlink MIMO layers, of serving cells in different frequency ranges, that the terminal device prefers to be configured.

12. The method according to claim 11, wherein the third information is further used to indicate that maximum quantities of uplink MIMO layers and maximum quantities of downlink MIMO layers, of serving cells in different frequency ranges, that are configured by the second network device for the terminal device are not restricted.

13. The method according to any one of claims 1 to 12, wherein the second message further comprises fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list comprises at least one aggregated bandwidth value.

14. The method according to claim 13, wherein the fourth information is further used to indicate that maximum aggregated bandwidth values across an uplink carrier and maximum aggregated bandwidth values across a downlink carrier that are configured by the second network device for the terminal device in different frequency ranges are not restricted.

15. The method according to claim 14, wherein the second message further comprises fifth information, and the fifth information is used to indicate a maximum aggregated bandwidth value reported by the terminal device in the first overheating assistance information.

16. The method according to any one of claims 1 to 15, wherein the second message further comprises sixth information, and the sixth information is used to indicate that the terminal device encounters an overheating problem.

17. The method according to any one of claims 1 to 16, wherein the second message further comprises seventh information, and the seventh information is used to indicate that the overheating problem of the terminal device is resolved.

18. The method according to any one of claims 9, 10, 11, 13, and 15, wherein
when the terminal device encounters an overheating problem, the second message further comprises second overheating assistance information, and the second overheating assistance information comprises at least one of the first information, the second information, the third information, the fourth information, and the fifth information; and
when the overheating problem of the terminal device is resolved, the second overheating assistance information comprises no information.

19. The method according to claim 18, wherein the first network device is a master node device in dual connectivity, the second network device is a secondary node device in dual connectivity, the second message is a secondary node modification request message, and the third message is a secondary node modification request response message.

20. An information transmission method, comprising:
receiving, by a second network device, a second message sent by a first network device, wherein the second message is used to indicate the second network device to adjust a communications parameter configured for a terminal device, and the communications parameter comprises at least one of the following parameters:
a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and
configuring, by the second network device, the communications parameter for the terminal device based on the second message.

21. The method according to claim 20, wherein the communications parameter specifically comprises:
at least one of the following parameters that the terminal device prefers to be temporarily configured: a maximum quantity of uplink secondary cells, a maximum quantity of downlink secondary cells, a maximum quantity of uplink MIMO layers of a serving cell in a first frequency range, a maximum quantity of downlink MIMO layers of the serving cell in the first frequency range, a maximum quantity of uplink MIMO layers of a serving cell in a second frequency range, a maximum quantity of downlink MIMO layers of the serving cell in the second frequency range, a maximum uplink aggregated bandwidth across an uplink carrier in the first frequency range, a maximum downlink aggregated bandwidth across a downlink carrier in the first frequency range, a maximum uplink aggregated bandwidth across an uplink carrier in the second frequency range, and a maximum downlink aggregated bandwidth across a downlink carrier in the second frequency range.

22. The method according to claim 20 or 21, wherein
the first message is a message that is sent by the terminal device to a master node device and that carries overheating assistance information.

23. The method according to claim 22, wherein
a maximum quantity of MIMO layers in the assistance information is a maximum quantity of MIMO layers, of a serving cell of an SCG, that the terminal device prefers to be configured by an SN; or
a maximum quantity of MIMO layers in the assistance information is a maximum quantity of MIMO layers, of a serving cell of an MCG, that the terminal device prefers to be configured by an MN; or
a maximum quantity of MIMO layers in the assistance information is a maximum quantity of MIMO layers, of a serving cell of an MCG, that the terminal device prefers to be configured by an MN, and is a maximum quantity of MIMO layers, of a serving cell of an SCG, that the terminal device prefers to be configured by an SN; or
maximum quantities of MIMO layers in the assistance information comprise a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN; and
the maximum quantity of MIMO layers in the assistance information comprises at least one of the maximum quantity of uplink MIMO layers of the serving cell in the first frequency range, the maximum quantity of downlink MIMO layers of the serving cell in the first frequency range, the maximum quantity of uplink MIMO layers of the serving cell in the second frequency range, and the maximum quantity of downlink MIMO layers of the serving cell in the second frequency range.

24. The method according to claim 22, wherein
a maximum aggregated bandwidth in the assistance information is a maximum aggregated bandwidth value, across a carrier, that the terminal device prefers to be configured by an SN; or
a maximum aggregated bandwidth in the assistance information is a maximum sum of an aggregated bandwidth, across a carrier, that the terminal device prefers to be configured by an MN and an aggregated bandwidth, across a carrier, that the terminal device prefers to be configured by an SN; and
the maximum aggregated bandwidth in the assistance information comprises at least one of the maximum uplink aggregated bandwidth across the uplink carrier in the first frequency range, the maximum downlink aggregated bandwidth across the downlink carrier in the first frequency range, the maximum uplink aggregated bandwidth across the uplink carrier in the second frequency range, and the maximum downlink aggregated bandwidth across the downlink carrier in the second frequency range.

25. The method according to any one of claims 20 to 24, wherein
the second message may be further used to request the second network device to configure a communications parameter for the terminal device.

26. The method according to any one of claims 20 to 25, wherein the method further comprises:
determining, by the second network device, a third message based on the communications parameter; and
sending, by the second network device, the third message to the first network device, wherein the third message is a response message for the second message, and the third message is used to indicate a communications parameter configured by the second network device for the terminal device.

27. The method according to any one of claims 20 to 26, wherein the second message further comprises a band combination list, and the band combination list comprises at least one band combination configured by the second network device for the terminal device.

28. The method according to any one of claims 20 to 27, wherein the second message further comprises first information, and the first information is used to indicate a maximum quantity of uplink secondary cells and/or a maximum quantity of downlink secondary cells that are/is configured by the second network device for the terminal device.

29. The method according to any one of claims 20 to 28, wherein the second message further comprises second information, and the second information is used to indicate a maximum quantity of secondary cells that is reported by the terminal device in the first overheating assistance information.

30. The method according to any one of claims 20 to 29, wherein the second message further comprises third information, and the third information is used to indicate maximum quantities of uplink MIMO layers and/or maximum quantities of downlink MIMO layers, of serving cells in different frequency ranges, that the terminal device prefers to be configured.

31. The method according to claim 30, wherein the third information is further used to indicate that maximum quantities of uplink MIMO layers and maximum quantities of downlink MIMO layers, of serving cells in different frequency ranges, that are configured by the second network device for the terminal device are not restricted.

32. The method according to any one of claims 20 to 31, wherein the second message further comprises fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list comprises at least one aggregated bandwidth value.

33. The method according to claim 32, wherein the fourth information is further used to indicate that maximum aggregated bandwidth values across an uplink carrier and maximum aggregated bandwidth values across a downlink carrier that are configured by the second network device for the terminal device in different frequency ranges are not restricted.

34. The method according to claim 33, wherein the second message further comprises fifth information, and the fifth information is used to indicate a maximum aggregated bandwidth value reported by the terminal device in the first overheating assistance information.

35. The method according to any one of claims 20 to 34, wherein the second message further comprises sixth information, and the sixth information is used to indicate that the terminal device encounters an overheating problem.

36. The method according to any one of claims 20 to 35, wherein the second message further comprises seventh information, and the seventh information is used to indicate that the overheating problem of the terminal device is resolved.

37. The method according to any one of claims 28, 29, 30, 32, and 34, wherein
when the terminal device encounters an overheating problem, the second message further comprises second overheating assistance information, and the second overheating assistance information comprises at least one of the first information, the second information, the third information, the fourth information, and the fifth information; and
when the overheating problem of the terminal device is resolved, the second overheating assistance information comprises no information.

38. The method according to claim 37, wherein the first network device is a master node device in dual connectivity, the second network device is a secondary node device in dual connectivity, the second message is a secondary node modification request message, and the third message is a secondary node modification request response message.

39. An information transmission method, comprising:
receiving, by a central unit CU, a first message sent by a terminal device, wherein the first message comprises overheating assistance information, and the overheating assistance information is used to indicate whether the terminal device is overheated;
determining, by the central unit, a second message based on the overheating assistance information, wherein the second message is used to indicate a distributed unit DU to adjust a communications parameter configured for the terminal device, and the communications parameter comprises a quantity of uplink multiple-input multiple-output layers MIMO layers and/or a quantity of downlink MIMO layers; and
sending, by the central unit, the second message to the DU.

40. The method according to claim 39, wherein
the first message is an overheating message sent by the terminal device to the CU.

41. The method according to claim 39 or 40, wherein
the second message comprises the overheating assistance information, the overheating assistance information comprises first information, and the first information is used to indicate maximum quantities of uplink MIMO layers and/or maximum quantities of downlink MIMO layers, of serving cells in different frequency ranges, that the terminal device prefers to be configured.

42. The method according to claim 39 or 40, wherein
the second message comprises the overheating assistance information, and the overheating assistance information comprises no information.

43. The method according to any one of claims 39 to 42, wherein the method further comprises:
receiving, by the central unit, a third message sent by the distributed unit, wherein the third message is a response message for the second message.

44. The method according to claim 39, wherein
the first message is a terminal device context modification request message, and the second message is a terminal device context modification response message.

45. The method according to claim 44, wherein
the second message comprises second information, and the second information is used to indicate maximum quantities of uplink MIMO layers and/or maximum quantities of downlink MIMO layers, of serving cells in different frequency ranges, that are configured by the distributed unit for the terminal device.

46. An information transmission method, comprising:
receiving, by a distributed unit DU, a second message sent by a central unit CU, wherein the second message is used to indicate the distributed unit to adjust a communications parameter configured for a terminal device, and the communications parameter comprises a quantity of uplink multiple-input multiple-output layers MIMO layers and/or a quantity of downlink MIMO layers; and
configuring, by the distributed unit, a maximum quantity of MIMO layers for the terminal device based on the second message sent by the central unit.

47. The method according to claim 46, further comprising:
determining, by the distributed unit, a third message based on the maximum quantity of MIMO layers, wherein the third message is a response message for the second message; and
sending, by the distributed unit, the third message to the central unit.

48. The method according to claim 46 or 47, wherein
the second message comprises overheating assistance information, the overheating assistance information comprises first information, and the first information is used to indicate maximum quantities of uplink MIMO layers and/or maximum quantities of downlink MIMO layers, of serving cells in different frequency ranges, that the terminal device prefers to be configured.

49. The method according to any one of claims 46 to 48, wherein the second message comprises the overheating assistance information, and the overheating assistance information comprises no information.

50. The method according to claim 46, wherein
a first message is a terminal device context modification request message, and the second message is a terminal device context modification response message.

51. The method according to claim 50, wherein
the second message comprises second information, and the second information is used to indicate maximum quantities of uplink MIMO layers and/or maximum quantities of downlink MIMO layers, of serving cells in different frequency ranges, that are configured by the distributed unit for the terminal device.

52. A communications apparatus, comprising:
an apparatus configured to receive a first message sent by a terminal device, wherein the first message comprises first overheating assistance information, and the first overheating assistance information is used to indicate whether the terminal device is overheated;
an apparatus configured to determine a second message based on the first overheating assistance information, wherein the second message is used to indicate a second network device to adjust a communications parameter configured for the terminal device, and the communications parameter comprises at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and
an apparatus configured to send the second message to the second network device.

53. The communications apparatus according to claim 52, wherein the communications parameter specifically comprises:
at least one of the following parameters that the terminal device prefers to be temporarily configured: a maximum quantity of uplink secondary cells, a maximum quantity of downlink secondary cells, a maximum quantity of uplink MIMO layers of a serving cell in a first frequency range, a maximum quantity of downlink MIMO layers of the serving cell in the first frequency range, a maximum quantity of uplink MIMO layers of a serving cell in a second frequency range, a maximum quantity of downlink MIMO layers of the serving cell in the second frequency range, a maximum uplink aggregated bandwidth across an uplink carrier in the first frequency range, a maximum downlink aggregated bandwidth across a downlink carrier in the first frequency range, a maximum uplink aggregated bandwidth across an uplink carrier in the second frequency range, and a maximum downlink aggregated bandwidth across a downlink carrier in the second frequency range.

54. The communications apparatus according to claim 53, wherein
a maximum quantity of MIMO layers in the assistance information is a maximum quantity of MIMO layers, of a serving cell of an SCG, that the terminal device prefers to be configured by an SN; or
a maximum quantity of MIMO layers in the assistance information is a maximum quantity of MIMO layers, of a serving cell of an MCG, that the terminal device prefers to be configured by an MN; or
a maximum quantity of MIMO layers in the assistance information is a maximum quantity of MIMO layers, of a serving cell of an MCG, that the terminal device prefers to be configured by an MN, and is a maximum quantity of MIMO layers, of a serving cell of an SCG, that the terminal device prefers to be configured by an SN; or
maximum quantities of MIMO layers in the assistance information comprise a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN; and
the maximum quantity of MIMO layers in the assistance information comprises at least one of the maximum quantity of uplink MIMO layers of the serving cell in the first frequency range, the maximum quantity of downlink MIMO layers of the serving cell in the first frequency range, the maximum quantity of uplink MIMO layers of the serving cell in the second frequency range, and the maximum quantity of downlink MIMO layers of the serving cell in the second frequency range.

55. The communications apparatus according to claim 53, wherein
a maximum aggregated bandwidth in the assistance information is a maximum aggregated bandwidth value, across a carrier, that the terminal device prefers to be configured by an SN; or
a maximum aggregated bandwidth in the assistance information is a maximum sum of an aggregated bandwidth, across a carrier, that the terminal device prefers to be configured by an MN and an aggregated bandwidth, across a carrier, that the terminal device prefers to be configured by an SN; and
the maximum aggregated bandwidth in the assistance information comprises at least one of the maximum uplink aggregated bandwidth across the uplink carrier in the first frequency range, the maximum downlink aggregated bandwidth across the downlink carrier in the first frequency range, the maximum uplink aggregated bandwidth across the uplink carrier in the second frequency range, and the maximum downlink aggregated bandwidth across the downlink carrier in the second frequency range.

56. The communications apparatus according to any one of claims 52 to 55, wherein
the second message may be further used to request the second network device to configure a communications parameter for the terminal device.

57. The communications apparatus according to any one of claims 52 to 56, wherein
the first message is a message that is sent by the terminal device to a master node device and that carries overheating assistance information.

58. The communications apparatus according to any one of claims 52 to 57, further comprising:
an apparatus configured to receive a third message sent by the second network device, wherein the third message is a response message for the second message, and the third message is used to indicate a communications parameter configured by the second network device for the terminal device.

59. The communications apparatus according to any one of claims 52 to 58, wherein the second message further comprises a band combination list, and the band combination list comprises at least one band combination configured by the second network device for the terminal device.

60. The communications apparatus according to any one of claims 52 to 59, wherein the second message further comprises first information, and the first information is used to indicate a maximum quantity of uplink secondary cells and/or a maximum quantity of downlink secondary cells that are/is configured by the second network device for the terminal device.

61. The communications apparatus according to any one of claims 52 to 60, wherein the second message further comprises second information, and the second information is used to indicate a maximum quantity of secondary cells that is reported by the terminal device in the first overheating assistance information.

62. The communications apparatus according to any one of claims 52 to 61, wherein the second message further comprises third information, and the third information is used to indicate maximum quantities of uplink MIMO layers and/or maximum quantities of downlink MIMO layers, of serving cells in different frequency ranges, that the terminal device prefers to be configured.

63. The communications apparatus according to claim 62, wherein the third information is further used to indicate that maximum quantities of uplink MIMO layers and maximum quantities of downlink MIMO layers, of serving cells in different frequency ranges, that are configured by the second network device for the terminal device are not restricted.

64. The communications apparatus according to any one of claims 52 to 63, wherein the second message further comprises fourth information, the fourth information is used to indicate lists of maximum aggregated bandwidths across an uplink carrier and/or lists of maximum aggregated bandwidths across a downlink carrier that are configured by the second network device for the terminal device in different frequency ranges, and the maximum aggregated bandwidth list comprises at least one aggregated bandwidth value.

65. The communications apparatus according to claim 64, wherein the fourth information is further used to indicate that maximum aggregated bandwidth values across an uplink carrier and maximum aggregated bandwidth values across a downlink carrier that are configured by the second network device for the terminal device in different frequency ranges are not restricted.

66. The communications apparatus according to claim 65, wherein the second message further comprises fifth information, and the fifth information is used to indicate a maximum aggregated bandwidth value reported by the terminal device in the first overheating assistance information.

67. The communications apparatus according to any one of claims 52 to 66, wherein the second message further comprises sixth information, and the sixth information is used to indicate that the terminal device encounters an overheating problem.

68. The communications apparatus according to any one of claims 52 to 67, wherein the second message further comprises seventh information, and the seventh information is used to indicate that the overheating problem of the terminal device is resolved.

69. The communications apparatus according to any one of claims 60, 61, 62, 64, and 66, wherein
when the terminal device encounters an overheating problem, the second message further comprises second overheating assistance information, and the second overheating assistance information comprises at least one of the first information, the second information, the third information, the fourth information, and the fifth information; and
when the overheating problem of the terminal device is resolved, the second overheating assistance information comprises no information.

70. The communications apparatus according to claim 69, wherein the communications apparatus is a master node device in dual connectivity, the second network device is a secondary node device in dual connectivity, the second message is a secondary node modification request message, and the third message is a secondary node modification request response message.

71. A communications apparatus, comprising:
an apparatus configured to receive a second message sent by a first network device, wherein the second message is used to indicate to adjust a communications parameter configured for a terminal device, and the communications parameter comprises at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and
an apparatus configured to configure the communications parameter for the terminal device based on the second message.

72. The communications apparatus according to claim 71, wherein the communications parameter specifically comprises:
at least one of the following parameters that the terminal device prefers to be temporarily configured: a maximum quantity of uplink secondary cells, a maximum quantity of downlink secondary cells, a maximum quantity of uplink MIMO layers of a serving cell in a first frequency range, a maximum quantity of downlink MIMO layers of the serving cell in the first frequency range, a maximum quantity of uplink MIMO layers of a serving cell in a second frequency range, a maximum quantity of downlink MIMO layers of the serving cell in the second frequency range, a maximum uplink aggregated bandwidth across an uplink carrier in the first frequency range, a maximum downlink aggregated bandwidth across a downlink carrier in the first frequency range, a maximum uplink aggregated bandwidth across an uplink carrier in the second frequency range, and a maximum downlink aggregated bandwidth across a downlink carrier in the second frequency range.

73. The communications apparatus according to claim 71 or 72, wherein
the first message is a message that is sent by the terminal device to a master node device and that carries overheating assistance information.

74. The communications apparatus according to claim 73, wherein
a maximum quantity of MIMO layers in the assistance information is a maximum quantity of MIMO layers, of a serving cell of an SCG, that the terminal device prefers to be configured by an SN; or
a maximum quantity of MIMO layers in the assistance information is a maximum quantity of MIMO layers, of a serving cell of an MCG, that the terminal device prefers to be configured by an MN; or
a maximum quantity of MIMO layers in the assistance information is a maximum quantity of MIMO layers, of a serving cell of an MCG, that the terminal device prefers to be configured by an MN, and is a maximum quantity of MIMO layers, of a serving cell of an SCG, that the terminal device prefers to be configured by an SN; or
maximum quantities of MIMO layers in the assistance information comprise a maximum quantity of MIMO layers, of a serving cell of an MCG, that the terminal device prefers to be configured by an MN, and a maximum quantity of MIMO layers, of a serving cell of an SCG, that the terminal device prefers to be configured by an SN; and
the maximum quantity of MIMO layers in the assistance information comprises at least one of the maximum quantity of uplink MIMO layers of the serving cell in the first frequency range, the maximum quantity of downlink MIMO layers of the serving cell in the first frequency range, the maximum quantity of uplink MIMO layers of the serving cell in the second frequency range, and the maximum quantity of downlink MIMO layers of the serving cell in the second frequency range.

75. The communications apparatus according to claim 73, wherein
a maximum aggregated bandwidth in the assistance information is a maximum aggregated bandwidth value, across a carrier, that the terminal device prefers to be configured by an SN; or
a maximum aggregated bandwidth in the assistance information is a maximum sum of an aggregated bandwidth, across a carrier, that the terminal device prefers to be configured by an MN and an aggregated bandwidth, across a carrier, that the terminal device prefers to be configured by an SN; and
the maximum aggregated bandwidth in the assistance information comprises at least one of the maximum uplink aggregated bandwidth across the uplink carrier in the first frequency range, the maximum downlink aggregated bandwidth across the downlink carrier in the first frequency range, the maximum uplink aggregated bandwidth across the uplink carrier in the second frequency range, and the maximum downlink aggregated bandwidth across the downlink carrier in the second frequency range.

76. The communications apparatus according to any one of claims 71 to 75, wherein
the second message may be further used to request the communications apparatus to configure a communications parameter for the terminal device.

77. The communications apparatus according to any one of claims 71 to 76, further comprising:
an apparatus configured to determine a third message based on the communications parameter; and
an apparatus configured to send the third message to the first network device, wherein the third message is a response message for the second message, and the third message is used to indicate a communications parameter configured by the communications apparatus for the terminal device.

78. The communications apparatus according to any one of claims 71 to 77, wherein the second message further comprises a band combination list, and the band combination list comprises at least one band combination configured for the terminal device.

79. The communications apparatus according to any one of claims 71 to 78, wherein the second message further comprises first information, and the first information is used to indicate a maximum quantity of uplink secondary cells and/or a maximum quantity of downlink secondary cells that are/is configured for the terminal device.

80. The communications apparatus according to any one of claims 71 to 79, wherein the second message further comprises second information, and the second information is used to indicate a maximum quantity of secondary cells that is reported by the terminal device in the first overheating assistance information.

81. The communications apparatus according to any one of claims 71 to 80, wherein the second message further comprises third information, and the third information is used to indicate maximum quantities of uplink MIMO layers and/or maximum quantities of downlink MIMO layers, of serving cells in different frequency ranges, that the terminal device prefers to be configured.

82. The communications apparatus according to claim 81, wherein the third information is further used to indicate that maximum quantities of uplink MIMO layers and maximum quantities of downlink MIMO layers, of serving cells in different frequency ranges, that are configured for the terminal device are not restricted.

83. The communications apparatus according to any one of claims 71 to 82, wherein the second message further comprises fourth information, the fourth information is used to indicate lists of maximum aggregated bandwidths across an uplink carrier and/or lists of maximum aggregated bandwidths across a downlink carrier that are configured for the terminal device in different frequency ranges, and the maximum aggregated bandwidth list comprises at least one aggregated bandwidth value.

84. The communications apparatus according to claim 83, wherein the fourth information is further used to indicate that maximum aggregated bandwidth values across an uplink carrier and maximum aggregated bandwidth values across a downlink carrier that are configured for the terminal device in different frequency ranges are not restricted.

85. The communications apparatus according to claim 84, wherein the second message further comprises fifth information, and the fifth information is used to indicate a maximum aggregated bandwidth value reported by the terminal device in the first overheating assistance information.

86. The communications apparatus according to any one of claims 71 to 85, wherein the second message further comprises sixth information, and the sixth information is used to indicate that the terminal device encounters an overheating problem.

87. The communications apparatus according to any one of claims 71 to 86, wherein the second message further comprises seventh information, and the seventh information is used to indicate that the overheating problem of the terminal device is resolved.

88. The communications apparatus according to any one of claims 79, 80, 81, 83, and 85, wherein
when the terminal device encounters an overheating problem, the second message further comprises second overheating assistance information, and the second overheating assistance information comprises at least one of the first information, the second information, the third information, the fourth information, and the fifth information; and
when the overheating problem of the terminal device is resolved, the second overheating assistance information comprises no information.

89. The communications apparatus according to claim 88, wherein the first network device is a master node device in dual connectivity, the communications apparatus is a secondary node device in dual connectivity, the second message is a secondary node modification request message, and the third message is a secondary node modification request response message.

90. A communications apparatus, comprising:
an apparatus configured to receive a first message sent by a terminal device, wherein the first message comprises overheating assistance information, and the overheating assistance information is used to indicate whether the terminal device is overheated;
an apparatus configured to determine a second message based on the overheating assistance information, wherein the second message is used to indicate a distributed unit DU to adjust a communications parameter configured for the terminal device, and the communications parameter comprises a quantity of uplink multiple-input multiple-output layers MIMO layers and/or a quantity of downlink MIMO layers; and
an apparatus configured to send the second message to the DU.

91. The communications apparatus according to claim 90, wherein
the first message is an overheating message sent by the terminal device to the CU.

92. The communications apparatus according to claim 90 or 91, wherein
the second message comprises the overheating assistance information, the overheating assistance information comprises first information, and the first information is used to indicate maximum quantities of uplink MIMO layers and/or maximum quantities of downlink MIMO layers, of serving cells in different frequency ranges, that the terminal device prefers to be configured.

93. The communications apparatus according to claim 90 or 91, wherein
the second message comprises the overheating assistance information, and the overheating assistance information comprises no information.

94. The communications apparatus according to any one of claims 90 to 93, further comprising:
an apparatus configured to receive a third message sent by the distributed unit, wherein the third message is a response message for the second message.

95. The communications apparatus according to claim 90, wherein
the first message is a terminal device context modification request message, and the second message is a terminal device context modification response message.

96. The communications apparatus according to claim 95, wherein
the second message comprises second information, and the second information is used to indicate maximum quantities of uplink MIMO layers and/or maximum quantities of downlink MIMO layers, of serving cells in different frequency ranges, that are configured by the distributed unit for the terminal device.

97. A communications apparatus, comprising:
an apparatus configured to receive a second message sent by a central unit CU, wherein the second message is used to indicate a distributed unit to adjust a communications parameter configured for a terminal device, and the communications parameter comprises a quantity of uplink multiple-input multiple-output layers MIMO layers and/or a quantity of downlink MIMO layers; and
an apparatus configured to configure a maximum quantity of MIMO layers for the terminal device based on the second message sent by the central unit.

98. The communications apparatus according to claim 97, further comprising:
an apparatus configured to determine a third message based on the maximum quantity of MIMO layers, wherein the third message is a response message for the second message; and
an apparatus configured to send the third message to the central unit.

99. The communications apparatus according to claim 97 or 98, wherein
the second message comprises overheating assistance information, the overheating assistance information comprises first information, and the first information is used to indicate maximum quantities of uplink MIMO layers and/or maximum quantities of downlink MIMO layers, of serving cells in different frequency ranges, that the terminal device prefers to be configured.

100. The communications apparatus according to any one of claims 97 to 99, wherein the second message comprises the overheating assistance information, and the overheating assistance information comprises no information.

101. The communications apparatus according to claim 97, wherein
a first message is a terminal device context modification request message, and the second message is a terminal device context modification response message.

102. The communications apparatus according to claim 101, wherein
the second message comprises second information, and the second information is used to indicate maximum quantities of uplink MIMO layers and/or maximum quantities of downlink MIMO layers, of serving cells in different frequency ranges, that are configured by the distributed unit for the terminal device.

103. A communications device, comprising a memory, a processor, and a computer program that is stored in the memory and that can be run on the processor, wherein when executing the program, the processor implements the method according to any one of claims 1 to 19, the method according to any one of claims 20 to 38, the method according to any one of claims 39 to 45, or the method according to any one of claims 46 to 51.

104. An apparatus, wherein the apparatus comprises a processor, and the processor is configured to: be coupled to a memory, read instructions in the memory, and perform, according to the instructions, the method according to any one of claims 1 to 19, the method according to any one of claims 20 to 38, the method according to any one of claims 39 to 45, or the method according to any one of claims 46 to 51.

105. A computer-readable storage medium, comprising instructions, wherein when the instructions are run on a computer, the computer is enabled to perform the method according to any one of claims 1 to 19, the method according to any one of claims 20 to 38, the method according to any one of claims 39 to 45, or the method according to any one of claims 46 to 51.

106. A computer program product, wherein when the computer program product is run on a computer, the computer is enabled to perform the method according to any one of claims 1 to 19, the method according to any one of claims 20 to 38, the method according to any one of claims 39 to 45, or the method according to any one of claims 46 to 51.

107. A chip, connected to a memory or comprising a memory and configured to read and execute a software program stored in the memory, to implement the method according to any one of claims 1 to 19, the method according to any one of claims 20 to 38, the method according to any one of claims 39 to 45, or the method according to any one of claims 46 to 51.

108. A communications system, comprising a first network device and a second network device, wherein
the first network device receives a first message sent by a terminal device, wherein the first message comprises first overheating assistance information, and the first overheating assistance information is used to indicate whether the terminal device is overheated; determines a second message based on the first overheating assistance information, wherein the second message is used to indicate the second network device to adjust a communications parameter configured for the terminal device, and the communications parameter comprises at least one of the following parameters: a quantity of uplink secondary cells, a quantity of downlink secondary cells, a quantity of uplink multiple-input multiple-output layers MIMO layers, a quantity of downlink MIMO layers, an uplink aggregated bandwidth, and a downlink aggregated bandwidth; and sends the second message to the second network device; and
the second network device receives the second message sent by the first network device, wherein the second message is used to indicate the second network device to adjust the communications parameter configured for the terminal device; and configures the communications parameter for the terminal device based on the second message.

109. A communications system, comprising a central unit CU and a distributed unit DU, wherein
the central unit CU receives a first message sent by a terminal device, wherein the first message comprises overheating assistance information, and the overheating assistance information is used to indicate whether the terminal device is overheated; determines a second message based on the overheating assistance information, wherein the second message is used to indicate the distributed unit DU to adjust a communications parameter configured for the terminal device, and the communications parameter comprises a quantity of uplink multiple-input multiple-output layers MIMO layers and/or a quantity of downlink MIMO layers; and sends the second message to the DU; and
the distributed unit DU receives the second message sent by the central unit CU; and configures a maximum quantity of MIMO layers for the terminal device based on the second message sent by the central unit.
